(19) Europäisches Patentamt
European Patent Office
Office européen des brevets

(11) EP 2 246 376 B1

(12) **EUROPEAN PATENT SPECIFICATION**

(45) Date of publication and mention of the grant of the patent:
**05.03.2014 Bulletin 2014/10**

(21) Application number: **09005837.1**

(22) Date of filing: **27.04.2009**

(51) Int Cl.:
***C08F 292/00*** *(2006.01)* ***C08F 291/00*** *(2006.01)*
***C08F 257/02*** *(2006.01)* ***C08F 259/00*** *(2006.01)*
***C08F 277/00*** *(2006.01)* ***C08F 285/00*** *(2006.01)*
***C08F 271/02*** *(2006.01)* ***C08G 83/00*** *(2006.01)*
***C08L 65/02*** *(2006.01)* ***C08G 61/02*** *(2006.01)*

(54) **Method for preparing particles with a conjugated polymer shell**

Verfahren zur Herstellung von Partikeln mit einer Polymerkonjugathülle

Procédé de préparation de particules avec un polymère enveloppe conjugué

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**03.11.2010 Bulletin 2010/44**

(73) Proprietor: **Leibniz-Institut für Polymerforschung Dresden e.V.**
**01069 Dresden (DE)**

(72) Inventors:
- **Kiriy, Anton**
**Dresden 01069 (DE)**
- **Senkovskyy, Volodymyr**
**Dresden 01069 (DE)**
- **Stamm, Manfred**
**Freital 01705 (DE)**

(74) Representative: **Andrae Westendorp**
**Uhlandstrasse 2**
**80336 München (DE)**

(56) References cited:
**GB-A- 1 421 854**
**US-A- 6 025 462**
**US-A1- 2003 180 370**
**US-A1- 2006 278 867**
**US-B1- 6 447 920**
**US-B1- 7 115 688**
**US-B2- 7 407 995**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 246 376 B1

## Description

The invention relates to a method for preparing particles with a conjugated polymer shell, to particles with said conjugated polymer shell obtained by the method, and to the use of said particles.

There is an increasing interest in polymer chemistry surrounding the synthesis, physical characterization and manipulation of nanometer and micrometer scale particles comprising pi-conjugated macromolecules.

Particles with pi-conjugated polymers as well as pi-conjugated polymers themselves such as conductive, semiconductive and luminescent ones have been developed as alternatives to traditional inorganic semiconductors and attract considerable attention of researchers as potentially low-cost materials for energy conversion and storage devices, light emitting devices, field effect transistors, sensors, and novel stimuli-responsive materials. However, further improvements of electronic properties of pi-conjugated polymers, as well as their processability and self-assembly properties are necessary to enter a broad market. It was shown that the properties of pi-conjugated polymers and the performance of devices constructed on their basis largely depend not only on their molecular structure, but also on a short-range organization and a long-range orientation of the polymer molecules. On the other hand, a significant progress has already been achieved in the preparation of well-defined nanoscale building blocks comprising non-conjugated polymers and inorganic particles that are able to self-assemble into periodic, functional materials with desired and otherwise unachievable properties.

One of the most efficient tools for the preparation of well-defined particles modified with organic polymer shell (s) is the surface initiated polymerization or "grafting-from" technique (see e.g. Edmondson et al., Chem. Soc. Rev. 2004, 33, 14). A surface initiated polymerization process involves chain-growth polymerization mechanism and proceeds as a one-by-one addition of monomers to initiator points that are covalently immobilized directly on a surface of a substrate. There are several methods to polymerize non-conjugated polymers according to the chain-growth method, e.g. free radical polymerisation, controlled radical polymerisation such as Atom Transfer Radical Polymerization (ATRP), Nitroxide-Mediated Polymerization (MNP) and Reversible Addition-Fragmentation chain Transfer polymerization (RAFT), anionic polymerization such as anionic polymerization of vinylic monomers, Ring-Opening Metathesis Polymerization (ROMP). All of the above mentioned methods are suitable for grafting non-conjugated polymers from a variety of substrate surfaces, e.g. from various particles (Matyjaszewski, K.; Davis, T. (Editors), Handbook of radical polymerization, Publisher: Wiley-Interscience, Hoboken 2002). An important feature of the polymer-modified particles prepared by a surface initiated polymerization is that tethered polymer chains grafted from the particles adopt a strongly stretched conformation due to high grafting densities (number of grafted chains per unit of surface area, e.g. per square nanometer) even at high polymerization degree of grafted polymers.

However, most of the known conjugated polymers are formed via step-growth condensation polymerization, wherein the growing chains react with each other to form even longer chains. Thus, a monomer or dimer, or trimer, or tetramer may react in the same way as an oligomer chain comprising hundreds of monomer units. This is in contrast to a chain-growth polymerization, where only monomers may react with growing chains. Therefore, the step-growth condensation polymerization is much less suitable for the selective surface initiated polymerization to form particles with a polymer shell. As a consequence, particles modified with densely grafted chains of conjugated polymers are still a great challenge.

As an alternative to the "grafting from" method, "grafting onto" techniques were applied for the preparation of nanoparticles with pi-conjugated polymer shells. According to the "grafting onto" method, the polymer is provided first and then grafted to the substrate surface, e.g. via an anchoring layer. For example, Frechet, J. Am. Chem. Soc. 2004, 126(21), 6550, discloses the use of amino- end-functionalized P3HT (poly(3-hexylthiophene)) to help solubilisation and organization of CdSe nanoparticles.

However, the "grafting onto" method only provides a limited surface grafting density due to the increased steric hindrance of the grafted polymer chains. This steric hindrance inhibits large free polymer chains from diffusing to open surface reactive sites thus preventing the formation of a dense polymer brush layer. Due to the relatively low grafting density the resulting modified particles do not provide all properties inherent to hybrid particles comprising densely grafted polymer chains (enhanced colloidal stability, unique optical properties, functionality, as specified below).

US 6,025,462 discloses an electrically conductive polymer comprising a) a hyperbranched polymer core structure providing a multiplicity of attachment points and b) nonbranching conjugated backbone chains radiating from the attachment points in three dimensions, said polymers exhibiting improved properties such as a lower melting temperature, a higher electrical conductivity or a lower surface roughness compared to polymers comprising the conjugated backbone chains alone. In particular, US 6,025,462 discloses the grafting of regioregular poly(3-hexylthiophene), rrP3HT, to a multifunctional core performing synthesis of P3HT in the presence of hyperbranched polyphenylene having bromothienyl terminal groups. Emrick et al. (J. Am. Chem. Soc. 2004, 126, 11322) and Schanze et al. (Langmuir 2007, 23, 4541) applied a similar strategy to graft poly(paraphenylene vinylene) and poly(phenylene ethynylene) derivatives, respectively, onto particles which surfaces were functionalized by reactive aryl halides.

An unavoidable feature of these methods is that a major amount of polymerized monomers remains ungrafted

and only a minor amount is grafted to the particles. As a result, the desired modified particles are contaminated with a large portion of ungrafted polymers and, therefore, the grafting density is rather low.

Kiriy et al. (J. Am. Chem. Soc. 2007, 129, 6626) reported the preparation of Ar-$Ni(PPh_3)_2$-X initiators for the *Kumada* polycondensation method by an oxidative addition of $Ni(PPh_3)_4$ to Ar-X. The method was applied in the grafting of rrP3HT from planar macroscopic surfaces of cross-linked surface-immobilized PS(Br) or from related surface-immobilized block copolymers. However, compared to other known Ni-based catalysts, this $Ni(PPh_3)_4$-based catalyst shows a much worse polymerization performance resulting in a higher polydispersity (Mw/Mn) and a lower regioregularity of the obtained grafted polymer chains, and is also prone to derive undesired homocoupling side reactions caused by a cross-linking of initiator precursors.

US 2006/0278867 A1 refers to a method for preparing regioregular poly(3-alkylthiophenes) and other polythiophenes by living polymerization. In particular, US 2006/0278867 A1 discloses a method comprising: combining a soluble thiophene monomer having a 3-alkyl substituent with an amide base and a divalent metal halide to form a modified thiophene monomer, polymerizing the modified monomer at a first molar concentration $[M]_o$ in the presence of a transition metal complex polymerization initiator at a second molar concentration [I] under conditions to form regioregular poly(3-alkylthiophene), wherein at the start of polymerization the ratio of first molar concentration for monomer: second molar concentration for initiator is about 125:1 or less. Further, US 2006/0278867 A1 discloses that the transition metal complex polymerization initiator is preferably a nickel (II) complex, in particular a nickel(II)diphosphino halogen complex such as $Ni(dppp)Cl_2$.

McCullough et al. (US 7,452,958 and Macromolecules 2005, 38, 8649) and Yokozawa et al. (J. Am. Chem. Soc. 2005, 127, 17542) showed that the well-known *Kumada* polycondensation method, when used for the preparation of rrP3HT and some other conjugated polymers, involves the chain-growth polymerization mechanism. However, a limitation of the *Kumada* polycondensation in the classical McCullough/Yokozawa performance is that it uses initiators generated *in-situ* by the reaction of one equivalent of a catalyst precursor (usually $NidpppCl_2$) and two equivalents of monomers. Thus, the growing polymer chains, in fact, propagate from some portion of monomer molecules that couple first with the initiator precursor and, therefore, this type of initiating is not suitable for the "grafting from" process. The disadvantage of McCullough/Yokozawa method is that the direct immobilization of the Ni catalyst supported by dppp in a manner as it has been done with $Ni(PPh_3)_4$ (Kiriy et al.) is impossible because of a much lower reactivity of $Ni(dppp)_2$ and dppp-based analogous of $Ni(PPh_3)_4$, towards the initiator precursor units.

The development of improved synthetic methods for preparing structures consisting of a particle core and a non-conjugated polymer shell on the nanometre and/or micrometre scale(s) would give entry into a new and versatile class of hybrid particles. A variety of film/particle systems leading to the formation of these core-shell or hybrid particles are already known in the art. Length and grafting density of the polymer molecules can be manipulated in a wide range via selecting monomers with suitable chemical properties and molecular weight, and then grafting such monomers from a surface of the particles via control of the reaction conditions. The grafting density determines the conformation of polymer chains, which in turn governs the effectiveness of the resulting polymer layer for a given application. The thus obtained polymer chains are capable of responding changes of temperature, solvent polarity, pH, and other stimuli, generally by reversible swelling, which leads to changes in the optical and electrical properties of the hybrid particles and allows for various technical applications.

US 7,115,688 describes nanoparticles comprising one or more non-conjugated polymer shells attached thereto, the polymer shells being formed by polymerizing propagation monomers of the formula P-L-N, wherein P is a moiety which provides a desired property or properties to each of the polymer shells, N is a cyclic olefin-containing group, and L is a bond or linker whereby N is attached to P. The core-shell nanoparticles were formed in the presence of a transition metal ring-opening metathesis catalyst.

US 6,627,314 describes the preparation of a nanocomposite particle comprising a core comprising silicon, and a grafted non-conjugated (co)polymer chain comprising two or more free radically (co)polymerizable monomers attached to the core. The polymerization was carried out using a catalyst comprising a transition metal such as Cu(II).

US 7,407,995 describes a magnesium hydroxide (MDH) composite comprising MDH particles with attached non-conjugated (co)polymer chains. This composite is obtained by a controlled radical (co)polymerization such as NMP, RAFT/MADIX (MADIX = Macromolecular Design by Interchange of Xanthates) or ATRP.

Although the above-described hybrid particles are suitable for some applications, there is still a need for new hybrid particles having improved properties, and there is still further a need for improved method for preparing hybrid particles comprising tethered pi-conjugated polymer shells.

It is therefore an object of the present invention to provide a method for preparing particles with a pi-conjugated polymer shell, which may be obtained easily and which avoids the disadvantages of the prior art.

According to a first aspect of the invention, this object is achieved by the method according to claim 1. Preferred embodiments of the method of the present invention are described in the dependent claims.

It has surprisingly been found that the object of the invention can be achieved by the preparation of specific catalytic (initiated) sites with NI(II) or Ni(0) compounds having specific ligands L, which are suitable for polymerizing pi-conjugated monomers to the surface of the particles. As a result, a shell of pi-conjugated homopolymers, block-, random- or gradient-(co)polymers can be obtained via surface-initiated chain-growth polymerization from initiated sites using an appropriate catalyst containing Ni(II) or Ni(0). These initiated sites are located on the surface of the particles and significantly increase the reaction rate and selectivity. The method according to the present invention especially provides a much higher grafting density of the polymer chains. The higher selectivity of the catalytic (initiated) sites results in that the major amount of polymerizable (propagation) monomers is consumed for the preparation of polymer chains grafted-from the surface of the particles, but not for the production of ungrafted oligomers or polymers contaminating the modified particles. This is advantageous in respect to a higher purity of the obtained hybrid particles and also allows preparing hybrid particles of a desired composition.

It has therefore unexpectedly been found that hybrid particles prepared according to the method of the present invention have improved properties compared to hybrid particles prepared by known methods, even when using the same core particles and the same propagation monomers.

The hybrid particles according to the present invention comprise particles with polymer chains fixed only with one end (fixating end) to the surface of the particles, whereas the other end (terminal end) is stretched away from the particles and is not connected to the particles.

The polymer chains grafted to the particles can be formed using various kinds of propagation monomers influencing the properties of the obtained hybrid particles, such as optical, electrical or binding properties towards synthetic molecules or nanoparticles, or affinity towards biomolecules, e.g. proteins, DNA.

Depending on the environmental conditions such as solvent polarity, pH, temperature, presence of specifically-binding compounds (analytes), the polymer chains grafted-from the particles can possess a different chain conformation, e.g. polymer chains can be in a planar, extended, collapsed, or coiled conformation. The conformation of the polymer chains again influences the physical parameters of the hybrid particles, e.g. light absorption (colour), fluorescent spectra, electrical conductivity that can be easily detected by a suitable analytical tool such as UV-Vis or fluorescence spectroscopy. Thus, those physical parameters are suitable for detecting the influence of the stimulus or another analyte, e.g. temperature, type of a solvent such as solvent polarity, pH, ionic strength, presence of ions, biological objects such as proteins, DNA/RNA or viruses, on the hybrid particles.

The amount of polymer chains grafted from the hybrid particles can be determined e.g. by UV-Vis absorption Spectroscopy. The analysis can be based on a quantitative comparison of UV-Vis spectra of ungrafted polymer chains, unmodified particles and hybrid particles. The amount of polymer grafted-from the particles can be determined from a calibration curve Y/X, wherein Y is the Integral intensity of UV-Vis absorbance of a polymer molecule and X is the amount of polymer contained in the mixture of polymer and particle, e.g. in wt.% or mg. Another useful approach to determine the amount of polymer chains grafted from the hybrid particles is a thermogravimetric analysis (TGA) according to which changes in weight of samples are measured in relation to a change in temperature. Since the core of the hybrid particle and the polymer shell decompose at different and frequently very specific temperatures, the composition of the hybrid particles can be quantitatively determined. Another analytical method suitable for analyzing a composition of the hybrid particles is a selective degrafting (cleavage) of the polymer shell (grafted from polymer chains) from the core (particle) followed by a standard characterization of the degrafted material, e.g. by GPC (Gel Permeation Chromatography). The amount of polymer chains grafted from the particles may be influenced by the synthesis conditions as well as by the kind of particles and propagation monomers which are used. The "grafting from" approach according to the invention allows for providing polymer chains with a molecular weight of up to several hundreds of thousands grams per mole and, therefore, a high graft density and film thickness from several tens to a few hundreds nanometers (in the dry state) can be obtained.

For the purposes of the present invention, a "surface-initiated chain-growth polymerization" (grafting-from) is a "quasi living" polymerization wherein side reactions such as termination, disproportionation and recombination are insignificant in the polymerization process compared to the influence of side reactions in chain propagation reactions. The resulting polymer chains can be produced with molecular weight control, narrow polydispersity, end-group control and the ability to a further chain extension. The term "polymer" means a homopolymer and (co)polymer having from 2 to 50,000 repeating units, which may include block, random, alternate or gradient (co)polymers or combinations thereof. The term "pi-conjugated polymer" means a polymer having a pi-electron conjugated system along the main chain (or "backbone"), and includes polymers that contain discrete conjugated segments as well as polymers that are completely pi-conjugated. The term "propagation monomer' (polymerizable monomer) refers to a monomer that can be polymerized by the chain-growth polymerization according to the invention. The propagation monomer can also be used in a (co) polymerization reaction to form a (co)polymer. The term "gradient (co)polymer" refers to a (co)polymer that exhibits a gradual change in composition along the chain from mostly A-monomer to mostly B-monomer. The term "alternate (co) polymer" refers a (co)polymer formed of two different monomer molecules that alternate in sequence in the polymer chain.

According to the invention, the term "aryl" means a substituted or unsubstituted, saturated or unsaturated aromatic, hydrocarbon substituent, which can be a single ring, or multiple rings, preferably from 1 to 3 rings, which are fused together or linked covalently. The term "heteroaryl" refers to aryl groups (or rings) that contain from one to four

heteroatoms selected from N, O and S, wherein the carbon and nitrogen atoms are optionally substituted, and which can also encompass substituted or unsubstituted ring systems, optionally five- or six-membered rings, in which one or more non-aromatic ring systems are fused or otherwise bound to a heteroaryl system.

The term "alkyl" refers to a straight, branched or cyclic chain radical, which may be fully saturated, mono- or polyunsaturated and can include di- or multivalent radicals, having a number of carbon atoms of from 1 to 30. Examples of alkyl-groups include but are not limited to groups such as methyl, ethyl, n-propyl, isopropyl, n-butyl, isobutyl, t-butyl, octyl, decyl, and the like, as well as cycloalkyl groups such as cyclopentyl, cyclohexyl and the like.

The terms "halo" and "halogen" refers to fluorine, chlorine, bromine or iodine atoms. Preferred halogens are chlorine, bromine and iodine.

The term "haloalkyl" refers to alkyl groups which are substituted with at least one halogen atom. Preferred haloalkyls are fluorinated and/or heteroatom substituted haloalkyls.

The terms "substituted alkyl", "substituted aryl" and the like mean that in the alkyl or aryl groups or other moiety, at least one hydrogen atom is replaced by one non-hydrogen substituent. Such substituents may be alkyl, aryl, or other functional groups such as halo, preferably fluorine, hydroxyl, nitro, cyano, amino, alkylamino, alkoxy, acyl (-CO-alkyl) and (-CO-aryl), acyloxy (-O-(CO)-R, R = alkyl, aryl, etc.), alkoxycarbonyl (-(CO)-O-alkyl), aryloxycarbonyl (-(CO)-O-aryl), or other non-protected or protected functional groups.

The term "heteroatom-containing alkyl" refers to an alkyl group in which at least one carbon atom is replaced by a heteroatom.

The hybrid particles according to the invention are consisting of particles with polymer chains attached to the surface of the particles.

According to a first aspect, the present invention thus provides a method for preparing hybrid particles comprising the steps of (a), (b), and (c) as defined in claim 1.

Additionally preferred, the polymerization reaction is quenched (terminated) at the end of step c) by addition of an acid, preferably HCl, to obtain the desired polymer chain lengths. The "end" of step c) depends on the desired properties of the hybrid particles and can be determined by a person skilled in the art by simple preliminary tests.

In step a) of the method according to the invention, the particles having a plurality of $-Ar^1-X$ groups (initiator precursor units) on their surface are provided.

The term "particles" or "nanoparticles" refers to single particles or an aggregate of particles. The particles can play a neutral role, i.e. can act only as a basis for growing of polymer chains in a defined position, i.e. from the initiator precursor units. However, the particles can also take an active position and be used for a desired technical application e. g. act as an electrode to detect a signal generated from a sensor. The particles can e.g. comprise a reflective surface or a metal layer, a semiconductor layer or a magnetic layer coating, allowing to use Surface Plasmon Resonance or UV-Vis spectroscopy or fluorescence spectroscopy as an analytical tool for detecting e.g. an analyte or another stimulus. For some applications it can be suitable to use an isolating material for the particles, e.g. metal oxide or a material that has photo-luminescent properties or fluorescent properties. The material of the particles may be selected depending on the technical application for which the hybrid particles are used.

Particles suitable for the method according to the present invention preferably have a mean diameter within the range of 1 nm to 500 μm, more preferred within the range of 1 nm to 300 μm, particularly preferred within the range of 1 nm to 100 μm. The size of the particles is selected depending on the technical application for which the particles are used. For the use in optoelectronic applications such as photovoltaics, polymer light emitting diodes, the particles preferably have a mean diameter within the range of 1 nm to 1 μm. Most preferred for optoelectronic applications are particles with a size (mean diameter) of from 1 nm to 100 nm. For biomedical and sensor applications more preferably the particles are from 10 nm to 10 μm. According to a further preferred embodiment, the particles have a mean diameter of less than 50 μm, more preferably less than 30 μm, especially preferably less than 10 μm. According to a further preferred embodiment, the particles have a mean diameter of more than 5 nm, particularly preferred more than 10 nm. Preferably the particles have a mean diameter in the range of 1 nm to 200 nm, particularly preferred from 1 nm to 100 nm.

In a further preferred embodiment, the particles have a narrow size distribution. Preferably, more than 80 % of the particles have a size within a range of ± 25 %, further preferred of ± 10 % of the mean diameter of the particles. The size of the particles may be determined e.g. by TEM (Transmission Electron Microscopy), DLS (Dynamic Light Scattering), SEM (Scanning Electron Microscopy) or AFM (Atomic Force Microscopy).

The particles preferably have a spherical shape but can also have the shape of a small platelet or a rod. Further preferred, the particles have a branched shape such as tetrapod. Alternatively, the particles can also have an irregular morphology. The particles can be massive or can be hollow. An example for hollow particles is e.g. a fullerene or a carbon nanotube. Massive particles having a spherical shape are preferred.

As already discussed, the particles according to the present invention may be made from any kind of material. According to a preferred embodiment, the particles consist of materials selected from silica or other oxides or hydroxides, e.g. $TiO_2$, $In_2O_3$, ZnO, $Fe_3O_4$, $Fe_2O_3$, magnesium hydroxide, aluminium hydroxide, organosilica; polymers e.g. cross-linked polystyrene and halogenated polystyrenes; metal, e.g. gold, silver, copper, platinum and alloys thereof, semiconductor e.g. CdSe, CdS, CdTe, $CuInS_2$, ZnS, ZnSe, ZnTe, PbS, PbSe, PbTe, Si, $HgI_2$, $In_2S_3$, $In_2Se_3In$, $In_2Te_3$, $Cd_3P_2$, $Cd_3As_2$, InAs, InP, GaP, GaAs and any combination of these materials.

According to a further preferred embodiment, the particles are inorganic or organic particles, wherein the inorganic particles are selected from the group consisting of metal oxides, metal hydroxides, organosilica, metals and metal alloys, semiconductor materials, and silica; and wherein the organic particles are polymer or (co)polymer particles, preferably from cross-linked polybromostyrene, polybromostyrene copolymerized with vinylpyridine or polybromostyrene copolymerized with glycidylmethacrylate. Preferably, the inorganic particles according to the invention are selected from the group consisting of metal oxide particles, preferably made from ZnO or $TiO_2$ or of semiconductor particles, preferably made from CdSe; and unmodified or modified silica particles. Most preferably, the silica particles are organosilica particles with metallic or magnetic nanoparticle cores.

Silica particles in the size range of a few nanometers to several tens of micrometers can be prepared according to the procedure developed by StOber et. al. (J. Colloid Menace Sci. 1968, 26, 62) and can be further modified according to the procedure developed by Nozawa et. al. (Langmuir 2005, 21, 1516). The method implies solgel hydrolysis of tetraalkyl orthosilicates (TAOS) under controlled conditions. For the preparation of the monodisperse particles with a size smaller than 100 nm, usage of "seeds" is helpful. The term "monodisperse particles" refers to particles that fall into a narrow range of diameters. The term "polydisperse particles" refers to particles that have a significant variation in the range of diameters. As such, many kinds of nanosized particles such as gold particles (Mann et al., Langmuir 2000, 16, 1454) or $Fe_3O_4$ particles (Rosenzweig et al., Langmuir 2005, 21, 7524) can be utilized. The seed particles serve as crystallization sites for the silica particles growth resulting into monodisperse nanosized particles with the core consisting of the seed material.

Suitable silica particles are also commercially available e.g. from Duke Scientific (Palo Alto, CA), Bangs Laboratories, Inc. (Fishers, Indiana, USA) (silica, magnetic particles) or Polysciences, Inc. (Warrington, USA).

Methods for making various oxide and hydroxide particles e.g. $TiO_2$, $In_2O_3$, Indium-Tin-Oxide, ZnO, $Fe_3O_4$, $Fe_2O_3$, magnesium hydroxide, aluminium hydroxide are also well known in the art. For instance, the synthesis of $In_2O_3$ particles is described by Narayanaswamy et al. (J. Am. Chem. Soc. 2006, 128, 10310) and the synthesis of Indium-Tin-Oxide (ITO) particles is described by Summers et al. (Adv. Mater. 2008, 20, 4163).

Magnesium hydroxide and aluminium hydroxide particles are also commercially available e.g. from Albemarle Corporation (Baton Rouge, Louisiana, USA). Borosilicate glass microspheres are available from e.g. Duke Scientific (Palo Alto, CA).

Methods for making metal, semiconducting and magnetic particles may be found in Schmid, G. (ed.) Clusters and Colloids (VCH, Weinheim, 1994); Hayat, M. A. (ed.) Colloidal Gold: Principles, Methods, and Applications (Academic Press, San Diego, 1991); Ahmadi et al., Science 1996, 272, 1924; Henglein et al., J. Phys. Chem. 1995, 99, 14129; Curtis et al., Angew. Chem., Int. Ed. 1988, 27, 1530; Brust et al., J. Chem. Soc. Chem. Commun. 1994, 801.

Methods for making CdSe, CdS, CdTe, $CuInS_2$, ZnS, ZnSe, ZnTe, PbS, PbSe, PbTe, Si, $HgI_2$, $In_2S_3$, $In_2Se_3In$, $In_2Te_3$, $Cd_3P_2$, $Cd_3As_2$, InAs, InP, GaP, and GaAs particles may be found in Weller, Angew. Chem., Int Ed. Engl. 1993, 32, 41; Henglein, A., Top. Curr. Chem. 1988, 143, 113; Henglein, Chem. Rev. 1989, 89, 1861; Brus, Appl. Phys. A. 1991, 53, 465; Wang and Herron, J. Phys. Chem. 1991, 95, 525; Olshavsky et al., J. Am. Chem. Soc. 1990, 112, 9438; Ushida et al., J. Phys. Chem. 1992, 95, 5382; Haggata et al., J. Mater. Chem. 1997, 7, 1969-1975-, Micic et al., J. Phys. Chem. 1995, 99, 7754.

Suitable nanoparticles are also commercially available from e.g. Ted Pella, Inc. (Redding, CA), Amersham Corporation (Louisville, USA), Nanoprobes, Inc. (Yaphank, New York, USA).

According to the present invention, the particles are fixed to one end of the polymer chains, wherein the plurality of polymer chains form a shell covering the particles, wherein the polymer chains are in a close distance to each other.

In the first step of the method according to the invention, particles are provided which have a plurality of initiator precursor units **-Ar$^1$-X** on their surface. The initiator precursor units are needed for the preparation of initiated groups on the surface of the particles.

The **-Ar$^1$-X** groups can be attached either in-situ, i.e. during the preparation of the particles, preferably via copolymerization using monomers having **-Ar$^1$-X** groups, or ex-situ, i.e. in a separate step after the formation of the particles.

According to the *in-situ* approach of the present invention, $(RO)_3Si-Ar^1-X$ or $Cl_3Si-Ar^1-X$, wherein R is substituted or unsubstituted $C_1$-$C_{30}$ alkyl or hydrogen, is added to the reaction mixture during the preparation of particles, preferably made from silica, in the moment when a predominant amount of e.g. tetraalkyl orthosilicates (TAOS) is already hydrolyzed and the silica particles have already been formed. Hydrolysis of $(RO)_3Si-Ar^1-X$ or $Cl_3Si-Ar^1-X$ in the presence of silica particles then results in particles with a silica core and an organosilica shell comprising **-Ar$^1$-X** groups (initiator precursor units).

According to the *ex-situ* approach of the present invention, any kind of silica particles including commercially available ones are useful for the preparation of the particles comprising **-Ar$^1$-X** groups. This method includes contacting the particles with a compound of the general formula **Y-Ar$^1$-X**, wherein $Ar^1$ is a substituted or unsubstituted, aryl or

heteroaryl group, X is a halogen, Y is a carbon- or silica-containing group, and results in the formation of multiple initiator precursor units **-Ar¹-X.** The compounds preferably are selected from $(RO)_3Si-Ar^1-X$, $Cl_3Si-Ar^1-X$, $(HO)_3Si-Ar^1-X$, HOOC-$Ar^1$-X, RHNOC-$Ar^1$-X and combination thereof, wherein R is a substituted or unsubstituted $C_1$-$C_{30}$ alkyl or a halide.

In the oxide and hydroxide particles, the Ti-O-Si, In-O-Si, Zn-O-Si, and Fe-O-Si bonds are generally weaker than the Si-O-Si bonds. Therefore, for obtaining the multiple initiator precursor units **-Ar¹-X** on the surface of these particles, especially for forming stable organosilica networks, the *ex-situ* approach is mostly preferred. Suitable attachment compounds according to the invention are $(RO)_3Si-Ar^1-X$, $Cl_3Si-Ar^1-X$, or $(HO)_3Si-Ar^1-X$, particular preferred HOOC-$Ar^1$-X, RHNOC-$Ar^1$-X, or $H_2PO_3-Ar^1-X$,.

As already discussed above, the metal particles according to the present invention can be selected from e.g. gold, silver, copper, palladium or platinum particles. Preferred attachment compounds for the formation of the initiator precursor units **-Ar¹-X** on metal particles and semiconductor particles are selected from the group consisting of HS-$Ar^1$-X, X-$Ar^1$-SS-$Ar^1$-X, NC-$Ar^1$-X, HOOC-$Ar^1$-X, $HSO_2-Ar^1-X$, $P(-Ar^1-X)_3$, $PR(-Ar^1-X)_2$, $PR_2(-Ar^l-X)$, $N(-Ar^1-X)_3$, NR(-$Ar^1$-X$)_2$, $NR_2(-Ar^1-X)$, wherein $Ar^1$ is a substituted or unsubstituted, aryl or heteroaryl group, X is a halogen, R is a substituted or unsubstituted $C_1$-$C_{30}$ alkyl group or a halide. Methods for preparing functionalized particles using such attachment compounds can be found in Xia and Whitesides, Angew. Chem. Int. Ed. 1998, 37, 550, and references cited therein; Bishop et al., Curr. Opinion Colloid & Interface Sci. 1996, 1, 127; Ulman, Chem. Rev. 1996, 96, 1533 - alkanethiols on gold; US 5,472,881 - binding of phosphorothiolates to gold surfaces; Allara and Nuzzo, Langmuir 1985, 1, 45 -carboxylic acids on aluminum; Allara and Tompkins, J. Colloid Interface Sci. 1974, 49, 410 - carboxylic acids on copper; Timmons and Zisman, J. Phys. Chem. 1965, 69, 984 - carboxylic acids on platinum; Maoz and Sagiv, Langmuir 1987, 3, 1045 - silanes on silica; Eltekova and Eltekov, Langmuir 1987, 3, 951 - aromatic carboxylic acids, aldehydes, alcohols and methoxy groups on titanium dioxide and silica; Sheen et al., J. Am. Chem. Soc. 1992, 114, 1514 - attachment of thiols to GaAs; Gu et al., J. Phys. Chem. B 1998, 102, 9015 - attachment of thiols to InP; Mayya et al., J. Phys. Chem. B 1997, 101, 9790 - attachment of amines to gold and silver; US 5,942,397 - attachment of thiols to silver and copper; Meyer et al. J. Am. Chem. Soc. 1988, 110, 4914 - attachment of amines to semiconductors.

Another useful way for the functionalization of the particles to form **-Ar¹-X** groups according to the invention is contacting the particles with copolymers containing **-Ar¹-X** groups in addition to groups providing binding to the particles, preferably silica particles. Preferably, the (co)polymers used for the functionalization of the particles are selected from the group consisting of bromostyrene copolymerized with vinylpyridine or bromostyrene copolymerized with glycidylmethacrylate, wherein vinylpyridine or glycidylmethacrylate monomers are responsible for the binding to the particles and the bromostyrene moieties are responsible for the binding to the catalyst.

The polymeric particles according to the invention are preferably prepared by emulsion polymerization or microwave-assisted copolymerization of vinylic monomers having in their structure **-Ar¹-X** groups with divinyl benzene or other divinyl cross-linkers, optionally with other vinylic monomers. The particles comprising initiated groups can also be prepared by photochemical or chemical cross-linking of polymers or (co)polymers having in their structure **-Ar¹-X** groups.

Methods for preparing polymer particles are well known in the art and may be found e.g. in Okubo et al., Colloid Polym. Sci. 1999, 277, 900; Cairns et al., Langmuir 1999, 15, 8052; Landfester et al., Macromolecules 1999, 32, 5222; Ming et al., Macromolecules 1999, 32, 528-530; Schaertl et al., Prog. Colloid Polym. Sci. 1998, 110, 285-290; Li et al., Macromolecules 1998, 31, 6841-6844; Zhang et al., Macromolecules 1997, 30, 6388-6390; Larpent et al., Macromolecules 1997, 30, 354-362; Banerjee et al., Macromolecules 1995, 28, 3940 3; Zheng et al. Macromolecules 2004, 37, 9954; and Hawker, et al. J. Am. Chem. Soc. 2006, 128, 15054.

The methods for preparing pi-conjugated polymer particles such as polypyrrole particles are disclosed e.g. in Kaynak, et al. Syn. Met. 2005, 151, 136; Mullen et al. Macromolecular Rapid Commun. 2006, 27, 586; polyaniline nanoparticles in Yakhmi et al., Langmuir, 2004, 20, 4874; poly(3,4-ethylenedioxythiophene) particles in Choi, et al. Syn. Met. 2004, 141, 293.

According to a preferred embodiment of the invention, polymer particles are prepared by halogenation of already formed polymeric particles, preferably pi-conjugated polymer particles, using a variety of halogenation agents. The halogenation agents preferably used in the present invention are selected from $Br_2$, $Cl_2$, BrCl, $I_2/HIO_3$, NBS, NCS and NIS.

In a particular preferred embodiment of the present invention, the **-Ar¹-X** initiator precursor units groups are selected from the group of compounds of the formula **1** to **10:**

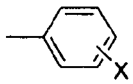 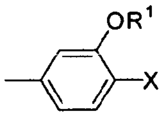 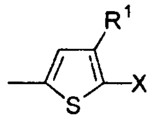 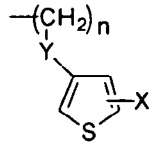

1 2 3 4

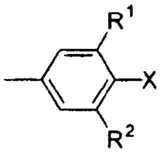 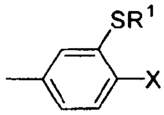 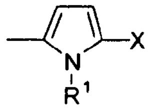 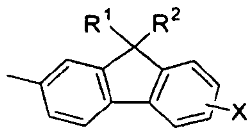

5 6 7 8

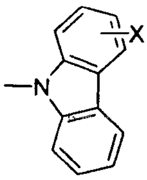 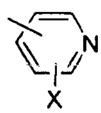

9 10

, wherein X is F, Cl, Br or I, and Y is S, O or $NR^1$, $R^1$ and $R^2$ are independently selected from substituted or unsubstituted $C_1$-$C_{30}$ alkyl group and a halide.

It is additionally preferred to clean the particles before starting the grafting from polymerization process. The cleaning step can be carried out using known methods, e.g. by redispersion of the particles in a suitable solvent followed by separation step, preferably by centrifugation or dialysis.

In step b) of the method according to the invention, the particles having initiator precursor units, which have been prepared in step a), are contacted with Ni(II) or Ni(0) compounds to activate the initiator precursor units, thereby forming the initiated sites. The preparation of the initiated sites on the particle surfaces involves conversion of the initiator precursor units **-$Ar^1$-X** into **-$Ar^1$-NiL-X** by contacting the particles with either Ni(II) (method A) or Ni(0) (method B) compounds, optionally in the presence of ligand L. The methods used for the preparation of the initiated sites on the surface of the particles according to the present invention are not known and can be performed using surface-immobilized **-$Ar^1$-X** groups. The initiated sites prepared on the surface of the particles efficiently induce polymerization of various conjugated polymers, preferably pi-conjugated polymers, selectively from the surface of the particles.

It has been also unexpectedly found that hybrid particles with improved properties can be provided when using the "grafting from" method according to the invention, starting from initiated sites on the surface of particles and polymerizing the polymer chains using specific Ni(II) or Ni(0) initiators with specific ligands L as defined in the claims. Using those Ni(II) or Ni(O)initiators (catalysts) allows to provide an improved method for preparing hybrid particles having a higher activity and higher selectivity with a very high lifetime of the catalysts.

According to the invention as defined in the claims, specific monodentate or bidentate ligands L can be used. If a monodentate ligand L is used, the symbol "L" in the formula "-$Ar^1$-NiL-X" represents two monodentate ligands due to the coordination valence of the nickel atom, e.g. -$Ar^1$-$Ni(PR_3)_2$-X. If a bidentate ligand L is used, only one ligand L is necessary to saturate the coordination valence of the nickel atom.

Suitable monodentate ligands L are selected from the group consisting of triarylphosphine ($PAr_3$) (compound **11**), trialkylphosphine ($PR_3$) (compound **12**) and mixtures thereof:

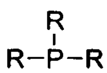 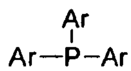

**12** **11**

Suitable bidentate ligands L are selected from the group consisting of 2,2'-bipyridyl (bipy) (compound **13**), α -N,N'-diaryl-acenaphthenediimine (daadi) (compound **14**), [1,3-bis(diphenylphosphino)propane] (dppp) (compound **15**),

1,2-bis(diphenylphosphino)ethane (dppe) (compound **16**), [1,1'-bis(diphenylphosphino) ferrocene] (dppf) (compound **17**) and mixtures thereof:

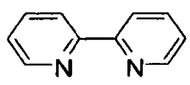
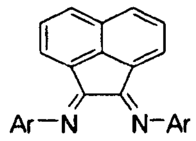
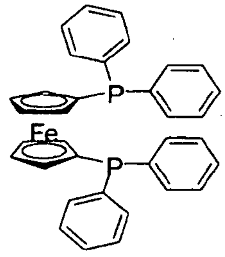

**13** **14**

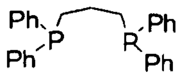
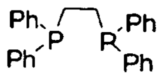

**15** **16** **17**

Preferred ligands L are bidentate ligands, in particular bipy, dppp and dppe.

Further preferred ligands L are bidentate ligands, in particular dppp and dppe.

The preparation of the initiated sites on the surface of the particles is carried out using "method A" with Ni(II) compounds or "method B" with Ni(O) compounds as set out below. "Method A" of the invention is carried out by using one of the following procedures:

A 1) activation of the initiator precursor units **-Ar¹-X** by reaction with $Et_2$Nibipy to form **-Ar¹-NIbipy-X;**
A transformation using aryl halides which are not attached to a surface of a substrate or another object or macromolecules was earlier reported by Wilke et al., Angew. Chem. Internat. Edit. 1966, 5, 581.

A 2) activation of the initiator precursor units **-Ar¹-X** by reaction with $Et_2$Nibipy to form **-Ar¹-Nibipy-X,** followed by the addition of ligand L to replace the bipy ligand against ligand L in order to form **-Ar¹-NiL-X;** preferably the ligand L is selected from a group consisting of [1,3-bis (diphenylphosphino) propane] (dppp), 1,2-bis(diphenyl-phosphino) ethane (dppe), [1,1'-bis(diphenylphosphino) ferrocene] (dppf), and combination thereof, especially preferred dppp is used as ligand L to form **-Ar¹-Nidppp-X;**

A 3) activation of the initiator precursor **units-Ar¹-X** by reaction with dialkyl[1,4-diarylacenaphthenediimine] nickel (II) ($R_2$Ni(daadi)) (compound **18**)

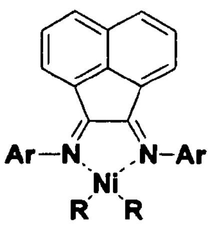

, wherein Ar is a substituted or unsubstituted aryl group, and R is a substituted or unsubstituted $C_1$-$C_{30}$ alkyl group, to form -**Ar¹-Ni(daadi)-X;**

A 4) activation of the initiator precursor units **-Ar¹-X** by reaction with dialkyl[1,4-diarylacenaphthenediimine] nickel (II) ($R_2$Ni(daadi)) (compound **18**) to form **-Ar¹-Ni(daadl)-X**, followed by the addition of ligand L to replace the daadi ligand against ligand L in order to form **-Ar¹-NiL-X;** preferably, the ligand L is selected from a group consisting of [1,3-bis(diphenylphosphino) propane] (dppp), 1,2-bis(diphenylphosphino)ethane (dppe), [1,1'-bis(diphenyl-phosphino) ferrocene] (dppf), and combinations thereof, especially preferred dppp is used as ligand L to form **-Ar¹-Nidppp-X.**

The preparation of the initiated sites on a surface of the particles according to "method B" of the invention is carried out by using one of the following procedures:

B 1) Activation of the initiator precursor units **-Ar¹-X** by the oxidative addition of $Ni(PAr_3)_4$ or $Ni(PR_3)_4$, preferably $Ni(PPh_3)_4$, to form **-Ar¹-Ni(PAr₃)₂-X** or -Ar¹-$Ni(PR_3)_2$-X, in particular -Ar¹-$Ni(PPh_3)_2$-X, wherein Ar is a substituted

or unsubstituted aryl group, R is a substituted or unsubstituted $C_1$-$C_{30}$ alkyl group and Ph is phenyl.
A transformation using aryl halides which are not attached to a surface of a substrate or another object or macromolecules was earlier reported by Hiday et al., J. Organometal. Chem. 1971, 30, 279.

B 2) Activation of the initiator precursor units **-$Ar^1$-X** by the oxidative addition of $Ni(PAr_3)_4$ or $Ni(PR_3)_4$, preferably $Ni(PPh_3)_4$, to form **-$Ar^1$-$Ni(PAr_3)_2$-X** or **-$Ar^1$-$Ni(PR_3)_2$-X**, in particular -$Ar^1$-$Ni(PPh_3)_2$-X, wherein Ar is a substituted or unsubstituted aryl group, R is a substituted or unsubstituted $C_1$-$C_{30}$ alkyl group and Ph is phenyl, followed by the addition of ligand L to replace the bipy ligand against ligand L in order to form **-$Ar^1$-NiL-X;** the ligand L is preferably selected from a group consisting of [1,3-bis (diphenylphosphino) propane] (dppp), 1,2-bis(diphenyl-phosphino) ethane (dppe), [1,1'-bis(diphenyl-phosphino) ferrocene] (dppf), and combination thereof, especially preferred dppp is used as ligand L to form **-$Ar^1$-Nidppp-X.**

B 3) Activation of the initiator precursor units **-$Ar^1$-X** by an oxidative addition of nickel tetracarbonyl $Ni(CO)_4$ in the presence of ligand L, preferably ligand L is a phosphorous bidentante ligand, especially preferably dppp, to form **-$Ar^1$-NiL-X,** in particular **-$Ar^1$-Nidppp-X.**
A transformation using aryl halides which are not attached to a surface of a substrate or another object or macromolecules was earlier reported by Fauvarque et al., Organomet. Chem. 1979, 177, 273).

B 4) Activation of the initiator precursor units **-$Ar^1$-X** by an oxidative addition of $Ni(COD)_2$ (COD = 1,5-cyclooctadiene) in the presence of ligand L, preferably ligand L is a phosphorous bidentante ligand, preferably dppp, to form **-$Ar^1$-NiL-X,** in particular **-$Ar^1$-Nidppp-X**.

B 5) Activation of the initiator precursor units **-$Ar^1$-X** to form **-$Ar^1$-NiL-X**, in particular **-$Ar^1$-Nidppp-X,** by an oxidative addition of a coordinated in-situ generated unsaturated NiL species. The in-situ generated Ni(0) species is obtained by reacting $Ni(L)X_2$, preferably $Ni(PAr_3)_2X_2$ or $Ni(PR_3)_2X_2$, with -$Ar^1$-X, preferably in the presence of ligand L, wherein preferably ligand L is different from the ligand L of the general formula $Ni(L)X_2$, with a reduction compound which reduces Ni(II) to Ni(0), wherein the reduction compound is a metal, preferably Zn, or metal-containing compound, preferably a metal hydride, especially preferred $NaBH_4$, or a compound of the general formula R-Z, wherein R is a substituted or unsubstituted $C_1$-$C_{30}$ alkyl group, Z is Li, Na, K, Mg-X or Zn-X, and X is a halogen, or a compound of the general formula R-O-Z, wherein R is a substituted or unsubstituted $C_1$-$C_{30}$ alkyl group, O is oxygen atom, Z is Li, Na, K, Mg-X or Zn-X, and X is a halogen, to form -$Ar^1$-NiL-X on the surface of the particles; wherein L is a phosphorous bidentante ligand as defined herein, preferably dppp, or monodentante ligand as defined herein, preferably $PAr_3$ or $PR_3$.
A transformation using aryl halides which are not attached to a surface of a substrate or another object or macromolecules was earlier reported by Sacco et al., J. Chem. Soc. Dalton Trans. 1994, 2761.

B 6) Activation of the initiator precursor units **-$Ar^1$-X** to form -**$Ar^1$-NiL-X,** in particular **-$Ar^1$-Nidppp-X**, by an oxidative addition of a coordinated unsaturated in-situ generated NiL species, wherein the in-situ generated Ni(0) compound is obtained in an electrochemical reduction of $Ni(L)X_2$ with a subsequent reaction of the formed Ni(0) compounds with -$Ar^1$-X in an electrochemical cell, preferably at a potential of about -1.4 V versus saturated calomel electrode.
A transformation using aryl halides which are not attached to a surface of a substrate or another object or macromolecules was earlier reported by Amatore et al., Organometalics 1988, 7, 2203.

Preferably, the method is carried out using method A 2), or B 2), or B 5).
It has been found that preferred solvents for the preparation of the initiator sites are apolar solvents e.g. hexane, because undesired disproportionation reactions of Ni complexes are more likely to occur in polar solvents, like THF (tetrahydrofurane). The most preferred solvents are hexane, toluene, benzene, acetone , especially preferred is toluene.
It has been surprisingly found that the method for the preparation of the initiated sites in many cases can be monitored by changes in the colour of the reaction mixture. For example, the addition of $Et_2$Nibipy to the particles having -Ph-Br groups is accompanied by a colour change from green to reddish-brown. The subsequent addition of dppp results in a fast change of the colour from reddish-brown to yellow. Thus, the inventive method is fairly simple, versatile and universal and allows an easy variation of ligands applying a simple substitution reaction.
The polymer chains can be formed using propagation monomers of any structure, however, it is preferred that the polymer chains are formed using linear propagation monomers. A linear propagation monomer is a monomer having only two functional groups which take part in the propagation reaction to form a polymer chain of a desirable length. The use of linear propagation monomers provides a high flexibility to the polymer chains that results in a high sensitivity of these polymer chains to the surrounding media due to easier changes in the polymer chain conformation. The propagation monomers are selected depending on the desired technical application for the hybrid particles. For example, the polymer

chains can contain non-polar groups, polar groups (functional groups) or combination thereof, wherein the functional groups of the propagation monomers influence the properties of the resulting hybrid particles. Exemplary functional groups that influence the polarity of the polymer chains are e.g. halogen atoms, aminocarbonyl, cyano or alkoxycarbonyl groups, protected amine or carboxyl groups, etc.

Preferably, the "propagation monomers" are represented by the general formula Z-$Ar^2$-X, wherein Z is XMg, XZn, or Li; X is F, Cl, Br, I; and $Ar^2$ is a substituted or unsubstituted aryl or heteroaryl group.

Further preferred propagation monomers of the general formula **Z-$Ar^2$-X** are selected from unsubstituted, and substituted thiophenes, such as compounds **19-22;** pyrroles, such as compound **23;** carbazoles, such as compound **24;** phenylenes, such as compounds **25-26;** fluorenes, such as compound **27;** *N*-alkyl dithieno[3,2-*b*:2',3'-*d*]pyrroles, such as compound **28;** 2,6-(4,4-bis-alkyl-4*H*-clopenta[2,1-b;3,4-b']-dithiophenes), such as compound **29,** and its dicyano derivatives, such as compound **30;** benzothiadiazoles, such as compound **31;** and monomers containing two or three aromatic rings such as compounds **32** to **35:**

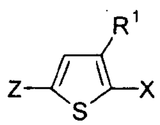
**19**

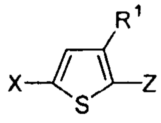
**20**

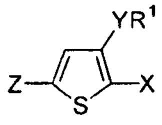
**21**

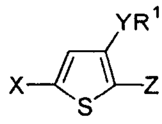
**22**

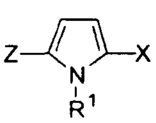
**23**

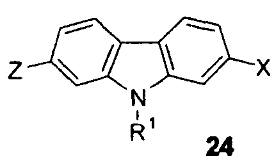
**24**

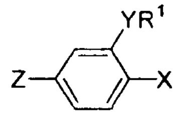
**25**

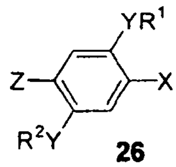
**26**

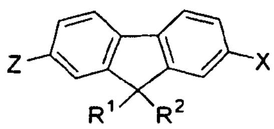
**27**

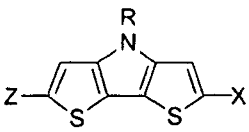
**28**

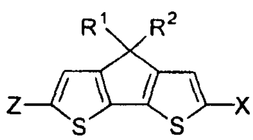
**29**

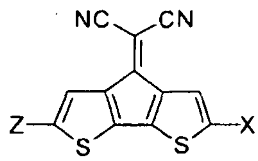
**30**

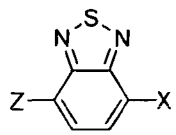
**31**

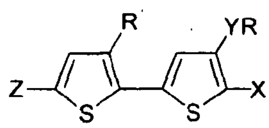
**32**

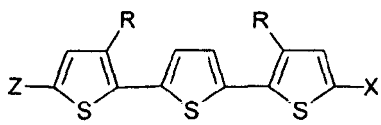
**33**

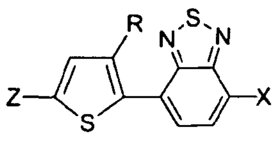
**34**

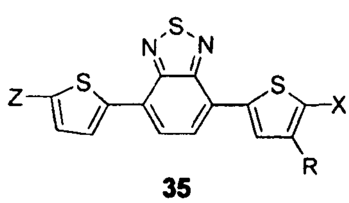
**35**

, wherein R, $R^1$, and $R^2$ are independently selected from substituted or unsubstituted $C_1$-$C_{30}$ alkyl groups or halides; Z is XMg, XZn, or Li; X is F, Cl, Br or I.

Synthetic routes to the propagation monomers useful for the method according to the present invention are well known in the art. For example, US 6,166,172 discloses the preparation of rrP3ATs from a mixture of isomeric 2-bromo-5-chloromagnesio-3-alkylthiophenes and 2-chloromagnesio-5-bromo-3-alkylthiophenes which can be obtained using a Grignard Metathesis Method (GRIM) from the corresponding 2,5-dibromides by the magnesium exchange-

reaction with alkylmagnesium halogenides. Similarly, alkoxy- and alkylthio- substituted thiophene propagation monomers may be obtained by the GRIM method from dibromo-substituted alkoxy- or alkylthio- thiophenes, respectively.

US 6,602,974 describes a method for a large-scale production of monomers that utilizes magnesium powder as a magnesium source.

Other synthetic routes to propagation monomers can be found in Yokozawa et al., J. Am. Chem. Soc. 2005, 127, 17542, describing the preparation of pure 2-chloromagnesio-5-bromo-3-alkylthiophenes and 2-chloromagnesio-5-bromo-3-alkoxythiophene isomers from asymmetrically substituted 2-iodo-5-bromo-3-alkylthiophenes. Alternatively, according to McCullough et al., J. Org. Chem. 1993, 58, 904, regiochemically pure 2-chloromagnesio-5-bromo-3-alkylthiophenes, 2-chlorozinc-5-bromo-3-alkylthiophenes and related monomers may be obtained in cryogenic conditions by deprotonation of 5-bromo-3-alkylthiophenes by lithium dialkyamides followed by exchange of lithium by zinc of magnesium. Using the above-described methodologies, other propagation monomers comprising differently substituted thiophene rings may be prepared.

Using the above mentioned synthetic strategies based on the substitution of one halide atom by the halide-magnesium or halide-zinc moiety in dihalide aryls, a number of other Z-$Ar^2$-X monomers, such as phenylene-based (**25** and **26),** pyrrole-based **(23),** carbazole-based **(24),** fluorine-based **(27),** dithieno[3,2-*b*:2',3'-*d*]pyrrole-based **(28)** and 4*H*-cyclopenta[2,1-*b*;3,4-*b*']-dithiophene)-based **(29)** monomers, can be obtained.

It has already been explained that the polymer chains may be formed from any propagation monomers. Preferably, however, the polymer chains are formed from propagation monomers that have not more than two reactive groups. According to one preferred embodiment of the invention, the polymer chains are formed from hydrocarbon repeating units. Such hydrocarbon repeating units preferably comprise only carbon and hydrogen.

According to a further embodiment, the **-$Ar^1$-** unit in **-$Ar^1$-X** or **-$Ar^1$-NiL-X** and the **-$Ar^2$-** unit in **Z-$Ar^2$-X** are independently selected from substituted or unsubstituted aryl or heteroaryl groups. In a preferred inventive embodiment, the aryl and heteroaryl groups comprise at least one five-membered or six-membered saturated or unsaturated carbon ring, wherein the at least one five-membered or six-membered saturated or unsaturated carbon ring of the heteroaryl groups contains at least one heteroatom selected from S and N. The aryl or heteroaryl groups preferably contain from 5 to 20 carbon atoms, preferably from 5 to 12 carbon atoms. Preferably, if more than one carbon ring is present, those carbon rings are fused rings or interconnected by linker groups, such as a methylene or ethylene moiety.

Suitable conditions for polymerizing the propagation monomers include those known in the art for polymerizing thiophene or derivatives thereof. Other suitable conditions can be determined by carrying out few routine experiments.

According to the invention, one sort of propagation monomers having a particular $Ar^2$ group or a mixture of different propagation monomers having different $Ar^2$ groups can be used to form a polymer chain having the desired properties. Furthermore, the polymerization of one sort of propagation monomers or a mixture of propagation monomers can be followed by the addition of one or more additional monomers, simultaneously, sequentially or after each other. The expression "sequentially" defines that the different propagation monomers are not added simultaneously or in a mixture, but are added separately form each other, wherein one kind of propagation monomers can be added more than once, e.g. a second time after the addition of another kind of propagation monomer, to provide an alternating polymer chain. This allows to form a plurality of different hybrid particles, wherein the hybrid particles have different properties depending on the preparation procedure. The expression "after each other" means that each of the different propagation monomers is added once, wherein the different propagation monomers are not added simultaneously or in a mixture, but are added separately form each other.

If more than one kind of propagation monomers is used, the propagation monomers can be added to the activated particles simultaneously to form random copolymer shells, or one after another to form block copolymers or gradient copolymer shells, or can be added sequentially. Alternate (co)polymer shells can be obtained using homopolymerization from **-$Ar^1$-NiL-X** modified particles using propagation monomers having at least two different aryl groups, like it is the case in monomers **34** or **35.**

The polymerization itself, the resulting size and properties of the polymer chains can be controlled by the reaction conditions, and the choice of catalyst, solvent, temperature, the type(s) of propagation monomer(s), the order of addition of the propagation monomer(s). Preferably, to achieve a better control of the reaction, the polymerization is stopped by the addition of a compound that terminates the polymerization reaction. Compounds suitable for terminating the polymerization reaction are known in the art.

According to an embodiment, the polymerization of suitable propagation monomers is carried out in a dispersion of particles having a plurality of **-$Ar^1$-NiL-X** groups in an appropriate solvent. Preferably, the solvent is a heterocyclic ether, which is selected from tetrahydrofurane (THF), 2-methyl tetrahydrofurane (Me-THF), 1,3-dioxolan, 4,4-dimethyl-1,3-dioxin. Most preferably, the solvent is THF or Me-THF.

The particles obtained in step b) may be provided in dispersed form in a suitable solvent and then at least one type of propagation monomers is added. The conditions for the reaction of the particle dispersion with the propagation monomers can easily be chosen by a skilled person. The reaction of the particles from step b) with the propagation monomers of the general formula Z-$Ar^2$-X is preferably carried out from a few tens of minutes to a few days, preferably

from 10 minutes to 24 hours, most preferably from 30 minutes to 12 hours, especially preferred from 30 minutes to 5 hours. Preferably, the reaction temperature is in the range of -10°C to 100°C, preferably from 0°C to 50°C, most preferably from 10°C to 30°C, particular preferably from 20°C to 25°C. The dispersion of particles and propagation monomers can be stirred during the reaction. The resulting hybrid particles are then isolated and rinsed with a sufficient amount of solvent, preferably the same solvent is used, which was used for the polymerization of the propagation monomers, to remove ungrafted (unbounded) oligomer or polymer molecules, the catalyst and byproducts. The purification according to the invention generally includes the dispersion of the hybrid particles in a solvent followed by the separation of the particles from the solvent by means of centrifugation. Preferably, the solvents for the purification of the hybrid particles are used in the following order: acid water, hydrazine, water, methanol, chloroform, THF, etc. For the particles having magnetic core, magnetic fields can be applied for the separation.

As described above, the structure of the formed polymer chains can be influenced and can be selected depending on the desired technical application of the hybrid particles. E.g. in sensor applications it is necessary that the polymer chains respond to the presence of an analyte or another stimulus by swelling or collapsing of the hybrid particles which can be detected by Surface Plasmon Resonance or UV-Vis spectroscopy or fluorescence spectroscopy. To achieve a high sensitivity, however, it is preferred that the polymer chains are formed of linear polymer molecules. In one embodiment, the polymer chains forming the shell of the hybrid particles prepared in steps a) to c) are further modified using suitable modification agents, preferably quaternization agents, to obtained hybrid particles which can be further dispersed in any polar solvent such as polar organic solvent or water. The treatment of such modified particles with water results in water-dispersable particles which may be used as an excellent sensing agent in water-based media. The sensing principle of water-soluble ionisable in polar solvents conjugated polymers such as conjugated polyelectrolytes both in a non-immobilized form or immobilized form, e.g. attached to the particles, is known in the art (Leclerc et al., Acc. Chem. Res. 2008, 41, 1110; Schanze et al., Langmuir 2007, 23, 4541).

The method according to the present invention provides new hybrid particles, preferably hybrid particles having a conjugated polyelectrolyte shell, with improved properties, e.g. due the high grafting density and advantageous polymerization reaction with less side reactions compared to known processes. The method according to the invention is especially advantageous for the preparation of hybrid particles having well defined properties.

The invention is therefore also directed to hybrid particles prepared according to the method according to the invention, wherein, preferably, the propagation monomers of the general formula **Z-Ar$^1$-X** are selected from compounds **19** to **35.**

The length of the polymer chains defines the thickness of the polymer shell of the hybrid particles, wherein the lengths of the polymer chains influence the properties of the resulting hybrid particles. The lengths of the polymer chains can be controlled as described above, e.g. by using compounds that stop the polymerization reaction at the desired lengths of the polymer chains. The thickness of the polymer shell can be measured e.g. using images of the hybrid particles obtained by scanning electron or atomic force microscope or can be determined from UV-Vis spectroscopy data or thermogravimetric analysis data. A contour length of the grown polymer chains can be calculated from their molecular weights determined by Gel Permeation Chromatography (GPC) for the polymers detached from the core of hybrid particles. In a dry state, i.e. in a state where basically no solvent molecules are present within the polymer chains, the thickness of the polymer shell is preferably within a range of 1 nm to 300 nm, preferably from 5 nm to 100 nm, most preferably from 10 nm to 60 nm.

In a further preferred embodiment, the polymer chains have a length within a range of 2 to 1.000 repeating units, more preferred 50 to 500 repeating units.

Although the length of the polymer chains is not particularly limited, the molecular weight distribution represented by the ratio Mw/Mn of the weight average molecular weight (Mw) to the number average molecular weight (Mn) is preferably 3.5 or less and most preferably 1.5 or less from the viewpoint that the degree of modification of particles is uniform between the particles. Preferably, the number of repeating units is chosen in order to provide a Mn within a range of 1.000 to 100.000 g/mol, more preferably from 10.000 to 80.000 g/mol. If the Mn of the polymer chains is less than 1.000, like in low molecular weight compounds, the stability of the hybrid particles is poor and the separation among particles deteriorates in the stage of isolation and purification. When the Mn of the polymer chains exceeds 100.000, the viscosity of the incubating solution will increase too much and will cause difficulties in handling.

The grafting density of the polymer molecules (polymer chains) should be high enough to achieve the desired properties of the hybrid particles depending on their further application, but should not be too high such that the polymer chains may become too stiff, which might negatively affect their properties. The grafting density of the polymer molecules is dependent on the propagation monomers and also on the amount of initiator precursor units on the surface of the particles. The grafting density is calculated on the basis of the molecular weight of the polymer molecules and the polymer layer thickness in a dry state. According to one embodiment, the grafting density of the polymer chains on the particles is within a range of from 0.01 to 1.0 chains/nm$^2$, more preferred of from 0.05 to 0.5 chains/nm$^2$. The distance between the initiated sites (grafting points) on the surface of the particles is preferably within a range of from 1.0 nm to 10.0 nm, more preferred of between 1.0 nm and 5.0 nm.

Hybrid particles are characterized by their multifunctionality that provides their use in several technological applications. The developed synthetic strategy to hybrid particles allows preparation of complex multishell particles. In addition to conjugated polymer shell(s), other polymers, such as vinyl ones, having desired functionality can be grafted from the particle core. The particles can be used as sensor and for biomedical applications for detecting an analyte in a medium or to detect another stimulus, e.g. temperature, pH or ionic strength of a solution, solvent polarity. Hybrid particles having doped conductive polymer shell can be applied for the preparation of conductive and, possibly, transparent films or used as conductive fillers to provide conductivity into otherwise non-conductive polymer matrix for antielectrostatic coatings or EMI-shielding (EMI = electromagnetic interference) applications.

Another important application for hybrid particles is the natural energy generation technology, including solar cells. Conventional solar cells are limited in their performance due to a variety of reasons. Furthermore, traditional solar cells and panels are not effectively stimulated by artificial indoor ambient light and are also not very effective on cloudy days. Therefore, the known solar cells are not very reliable in many regions where the weather pattern does not guarantee sunshine. Even in sunny climates, solar panels must be positioned at special angles and are not as efficient as they should be with their harvesting potential restricted to the peak sun hours of the day. Currently, various solar cells have been designed to receive and convert sunlight into electrical energy. Such solar cells have been applied on roofs of buildings and cars, or have been applied on portable electronic devices.

Single crystal solar cells provide energy conversion efficiencies as high as about 25 %. Where the Sibased crystals are no longer single crystals but polycrystalline, the highest efficiencies are in the range of about 18 %, and with amorphous Si the efficiencies are about 12 %. Solar cells based on Si are, however, rather expensive to manufacture, even in the amorphous Si version.

Therefore, alternatives have been developed based on organic compounds and/or a mixture of organic and inorganic compounds, the latter type solar cells often being referred to as hybrid solar cells. Organic and hybrid solar cells have proved to be cheaper to manufacture, but seem to have yet comparably low efficiencies even when compared to amorphous Si cells. Due to their inherent advantages such as lightweight, low-cost fabrication of large areas, earth-friendly materials, or preparation on flexible substrates, efficient organic or hybrid devices might prove to be technically and commercially useful "alternative solar cells".

Organic photovoltaic devices contain both electron donors which release an electron when irradiated, and electron acceptors, which complete the circuit necessary to convert light energy into electrical energy. However, mixtures of typical electron donors such as conjugated polymers or oligomers and electron acceptors, such as fullerene ($C_{60}$), have a tendency to form alternating stacks that results in lower efficiency.

A partial solution is to directly attach the electron donor to the electron acceptor by a covalent bond, but it is still important to have control over how the molecules pack together. The use of hybrid particles comprising a particle with covalently bonded polymer chains allows for preparing a hybrid solar cell having advantageous over traditional silicon-based solar cells as well as polymer-based solar cells. The cells may be made from hybrid particles comprising an electron donor and electron acceptor. Grafted-from polymer chains of preferably linear polymers usually make up the electron donor molecules because the extensive delocalised p-electrons are easily excited by light from the visible spectrum. These electrons transfer to electron-acceptor component of the hybrid particles such as a particle itself which carries the charge through the cell to move electrical current.

It has been unexpectedly found that the properties of the hybrid particles obtained by using the method according to the invention have improved properties with respect to their use in solar cells and related applications.

The present invention is therefore also directed to the use of the hybrid particles according to the invention in optoelectronic, sensor and solar cell applications.

Preferably, the present application is directed to the use of the hybrid particles in a solar cell, wherein the solar cell comprises the hybrid particles, preferably the solar cell comprises a layer comprising hybrid particles.

Bulk heterojunction, hybrid and dye-sensitized solar cells are the most preferable types of solar cells. Such solar cells comprise electron-donor, electron-acceptor components which are both electron-donor and electron-acceptor as principal components (Sariciftci et al., Chem. Rev. 2007, 107, 1324). Preferably, the hybrid particles prepared according to the method of the present invention are used in the above-mentioned types of solar cells. In said solar cells, the hybrid particles are preferably used as an electron-donor or electron-acceptor component or both electron-donor and electron-acceptor components.

In a preferred embodiment of the invention, the hybrid particles as defined herein are used for the preparation of solar cells, preferably bulk heterojunction, hybrid and dye-sensitized solar cells.

According to the invention, the term "bulk heterojunction solar cell" refers to a solar cell providing an interface (phase separation) between any two solid state materials including crystalline and amorphous structures of metallic, insulating, fast ion conductor and semiconducting material.

The term "dye-sensitized solar cell" refers to a thin-film solar cell, wherein the basic element is a nanostructured material, which is composed of two conductors, a particle (semiconductor) and molecular sensitizers (dye molecules) attached to the semiconductor surface.

The term "hybrid solar cell" refers to a mix solar cell comprising dye-sensitized component and a pi-type conductor, in particular metal, metal oxide or semiconductor particles are used as a dye-sensitized component and a pi-conjugated polymer is used as a polymeric conductor.

The present invention is therefore also directed to a solar cell containing hybrid particles as defined herein.

The invention will now be described in more detail by way of examples and with references to the accompanying figures:

Fig. 1 schematically shows the preparation of the initiated sites **-Ar$^1$-NiL-X.**

Fig. 2 schematically shows the preparation of hybrid particles comprising pi-conjugated homopolymer, random copolymer or block copolymer chains (polymer shell).

Fig. 3 shows TGA curves (TGA = Thermogravimetric Analysis) of hybrid particles: **(1)** 500 nm bromophenylethylsilica particles corresponding to the example 2; **(2)** 500 nm bromophenylethylsilica particles with grown P3HT shell corresponding to the example 3; **(3)** 500 nm bromophenylethylsilica particles with grown poly(3-dodecylthiophene) (P3DDT) shell corresponding to the example 4.

Fig. 4 shows a H$^1$-NMR spectrum of P3HT degrafted from 500 nm bromophenylethylsilica particles (example 3).

Fig. 5 shows GPC traces (GPC = Gel Permeation Chromatography) of P3HT degrafted from 500 nm bromophenylethylsilica particles (example 3): **(1)** treated once with HF, **(2)** treated twice with HF, **(3)** unmodified particles used as a standard.

Fig. 6 shows UV/Vis spectra (A) of a dispersion of 500 nm bromophenylethylsilica particles with grown P3HT shell (example 3) in chloroform (1) and THF (2), and (B) of the same P3HT after degrafting from the particles.

Fig. 7 shows fluorescence spectra (A) of a dispersion of 500 nm bromophenylethylsilica particles in THF with grown P3HT shell (example 3), and (B) of the same P3HT after degrafting from the particles.

Fig. 1 schematically shows the preparation of initiated sites **-Ar$^1$-NiL-X** on the surface of the particles by conversion of the initiator precursor units **-Ar$^1$-X** into **-Ar$^1$-NiL-X** by contacting the particles with either NI(II) (method A) or Ni (0) (method B) compounds.

Fig. 2 schematically shows the preparation of hybrid particles comprising a pi-conjugated polymer or (co)polymer shell. If only one propagation monomer is used for the polymerization, homopolyers are obtained (first reaction in Fig.2). A homopolymer shell refers to a polymer shell consisting of only one kind of repeating units. If a mixture of different propagation monomers is used for forming the polymer chains, the hybrid particles will be provided with a random (co)polymer shell (second reaction in Fig.2). A random (co)polymer shell is composed of at least two kinds of repeating units which are randomly distributed along the polymer chain. If different propagation monomers are used sequentially, a block copolymer shell will be obtained (third reaction in Fig.2). A block copolymer shell consists of at least two homopolymer chains covalently bonded to each other at one end.

Fig. 3 shows thermograms and the temperature of the maximum decomposition of the unmodified bromophenylethylsilica particles (curve 1, example 2) and the particles modified with P3HT (curve 2, example 3) and P3DDT (curve 3, example 4) in terms of TGA analysis. The decomposition behaviour with a sharp degradation slope is very similar for P3HT and P3DDT and the maximum temperature of the main decomposition occurs at 450°C. TGA analysis of the resulting unmodified and modified particles allows for evaluating the mass content of P3HT and P3DDT polymers as being 13 wt.-% and 17 wt.-%, respectively, that results in the thickness of the grown polymer shell or length of the polymer chain (h) calculated as being 20 nm for P3HT and 25 nm for P3DDT.

Fig. 4 shows a H$^1$-NMR spectrum of P3HT degrafted from 500 nm bromophenylethylsilica particles (example 3) obtained by dissolving the hybrid particles in HF. H$^1$-NMR spectroscopy is an extremely useful technique for the elucidation of structure and for the identification of structural defects in pi-conjugated polymers. P3HT was shown to have very low levels of mislinkages in the polymer backbone. The intense signal at 7.0 ppm can be assigned to the protons in position 3 of the thiophene ring. The peak at 7.26 ppm corresponds to the $CDCl_3$ used as a solvent. NMR analysis of P3HT surprisingly results in a relatively high head-to-tile (HT) regularity (of about 90-95%) indicated by a very broad peak at 2.8 ppm for the resulting P3HT and in high molecular weight precluding end-groups detection. These results indicate that $Et_2$Nibipy is very advantageously with respect to the reactivity and the selectivity of the

polymerization (grafting-from) reaction of the corresponding propagation monomers. The peak at 0.8 ppm corresponds to methyl ($-CH_3$) group and a number of peaks in the region of 1.0 to 1.8 ppm correspond to methylene ($-CH_2-$) groups of hexyl radical.

Fig. 5 shows GPC traces of P3HT degrafted from 500 nm bromophenylethylsilica particles (example 3), wherein said particles were treated once (curve 1) or twice (curve 2) with HF. Curve 3 corresponds to the unmodified particles used as a standard. As it follows from the GPC data, the molecular weight of the degrafted P3HT chains results in number average molecular weight (Mn) of 43.000 g/mol and PDI of 2.6 that corresponds to number-average polymerization degree DP of 256 and to the contour length of 97 nm.

The grafting density ($\sigma$) of tethered P3HT chains was calculated by the equation:

$$\sigma = h / V_{P3HT\text{-}chain}$$

wherein h is the thickness of the polymer shell and $V_{P3HT\text{-}chain}$ is the volume that occupies the single polymer chain in the solid state:

$$V_{P3HT\text{-}chain} = Mn_{P3HT\text{-}chain} / (\rho_{P3HT}\ N_A)$$

wherein $N_A$ is the Avogadro constant and $\rho_{P3HT}$ is the density of P3HT.

The grafting density of the P3HT was found to be ~1 g/cm$^3$, $Mn_{P3HT}$= 43.000 g/mol and the dry-state thickness of the P3HT shell, $h_{P3HT}$= 20 nm, $V_{P3HT\text{-}chain}$= 71.7 nm$^3$. On the basis of the above mentioned parameters the grafting density to the P3HT was evaluated to be 0.28 chains/nm$^2$ that corresponds to a distance (D) between adjacent chains of $D = 1/\sigma^{1/2} \sim 1.9$ nm.

Radius of gyration (*Rg*) for P3HT of different molecular weight (Mw) was previously measured and for P3HT of Mw 42.300 g/mol was found to be of about 13 nm in chloroform (Gettinger et al., Polym. Engin. Sci. 1995, 35, 860).

The reduced tethered density ($\Sigma$) can be thus estimated to be $\Sigma = \sigma \pi Rg^2 = 0.28 \times 3.14 \times 13^2 = 148$. The values of *D*, $\sigma$ and $\Sigma$ correspond to a "true brush" regime of very densely grafted polymer brushes with strongly stretched P3HT chains (Brittain et al., J. Polym. Sci. Part A: Polymer. Chem. 2007, 45, 3505).

As a result of high grafting density, the hybrid (hairy) P3HT particles display much higher colloidal stability than the parents unmodified particles. Thus, unmodified 500 nm organosilica particles show poor colloidal stability in organic solvent (much better in water), whereas this particles after modification with P3HT are stable in chloroform, which is usually a good solvent for P3HT. Although the observed stabilizing effect for colloids modified with polymer brushes is already known in the case of non-conjugated polymers, this effect is rare in the case of conjugated polymers, especially pi-conjugated polymers.

It has to be noted that the photophysical properties of the chains tethered to the particles differ significantly from the properties of the same chains in their detached-from-the-core state. Fig. 6 and Fig. 7 show absorption (UV/Vis) and luminescence (fluorescence) spectra for dispersions of hibrid P3HT particles and spectra of P3HT detached from the 500 nm bromophenylethylsilica particles. The polymer shell thickness of the hybrid particles is ~20 nm.

P3HT detached from the 500 nm silica particles displays usual for high Mw P3HT orange colour and spectral characteristics in THF and chloroform with the absorption $\lambda_{max}$ = 450 nm (Fig. 6b) and a strong luminescence with $\lambda_{max}$ = 560 nm (Fig. 7b). In a sharp contrast, the dispersion of P3HT hybrid particles in THF has a violet color and an absorption with an absorption maximum at $\lambda_{max}$ = 555 nm and a shoulder at $\lambda$ = 605 nm (Fig. 6a) and a very intense and strongly red-shifted luminescence with $\lambda_{max}$ = 670 nm with the shoulder at 770 nm (Fig. 7b). The red-shifted absorption spectra usually reflect significant planarization of the conjugated backbone and/or inter-chain aggregation resulting into efficient delocalization of the pi-conjugated electrons causing lowering of free energy.

The red-shifted spectra are usually observed for regioregular head-to-tail poly(3-alkylthiophenes) (P3ATs) films or for P3ATs colloids formed after addition of non-solvent to solutions that causes by aggregation of P3ATs chains and their aggregation-assisted planarization. At the same time, red-shifted fluorescence of P3ATs films is always accompanied by a drastic quenching of the luminescence intensity due to inter-chain interactions. The observed red-shifted but intense luminescence of dispersions of the hybrid P3HT particles according to the invention can be attributed to the "brush-like" state for tethered P3HT chains that provides a highly planar conformation for stretched chains without their too strong aggregation.

## Examples

Materials:

Starting reagents were purchased from Aldrich Chemical Company and used without further purification, unless otherwise noted. Tetrahydrofuran (THF), toluene and diethyl ether were distilled over sodium/benzophenone. All solvents were distilled under nitrogen and saturated with nitrogen prior to use. Unless otherwise noted, all reactions were carried out under a dry nitrogen atmosphere using standard Schlenk techniques or in an inert-atmosphere glovebox.

Characterization:

$^1$H-NMR spectra were recorded on a Bruker DRX-500 spectrometer operating at 500.13 MHz for $^1$H using $CDCl_3$ as solvent. The spectra were referenced on the solvent peak ($\delta$(1 H) = 7.26 ppm).
GPC measurements were carried out on Agilent 1100 Series (Agilent, USA) normal-temperature size exclusion chromatograph, equipped with refractive index detector and one column PL Gel MIXED-B (Polymer Laboratories, UK), eluent-chloroform and flow rate 1 mL/min. Calibration was based on polystyrene standards obtained from Polymer Standards Service (PSS, Germany).
TGA measurements were performed using TGA Q 5000IR (TA Instruments, Eschborn, Germany) optional with FTIR Nicolet 380 (Thermo Electron).
UV/Vis and fluorescent measurements were carried out using Perkin Elmer UV/Vis Spectrometer Lambda 800.

General preparation procedure:

All operations were performed under Ar-atmosphere in a glovebox.

Preparation of initiated sites -$Ar^1$-Nibipy-X on the surface of the particles

The preparation of initiated sites on the particle surfaces has been done by conversion of the initiator precursor units **-$Ar^1$-X** into **-$Ar^1$-NiL-X** by contacting the particles with either Ni(II) (method A) or Ni(0) compounds (method B), optionally in the presence of a ligand (L).

Method A: utilization of NI(II) compounds

Method A 1) (one step procedure)

According to this method, the preparation of the initiator sites is performed by adding NI(II) compounds, such as, $Et_2$Nibipy, to **-Ar-X** modified particles dispersed in an appropriate solvent and stirred to form **-$Ar^1$-Nibipy-X.** The resulting particles are separated from the reaction mixture by centrifugation. The modified particles are purified from unattached catalyst by redispersion in anhydrous freshly distilled THF, or toluene followed by centrifugation (at 5000 rpm for 15 min). The resulting **$Ar^1$-Nibipy-X** modified particles can be used for the polymerization of monomers, such as **19** to **35.**

Method A 2) (two step procedure)

Preferably, the **$Ar^1$-Nibipy-X** modified particles obtained in the one-step method are further modified by replacement of bipy with some other ligands selected from compounds **11** to **17,** preferably by phosphorous bidentante ligands. Such ligands in the structure of **-$Ar^1$-NiL-X** initiators are very efficient in the chain-growth polymerizations. To this end, the respective ligand, such as dppp, is added to and stirred with the dispersion of **$Ar^1$-Nibipy-X** modified particles. Dppp, dppe or the like can be added either without purification of the **$Ar^1$-Nibipy-X** modified particles, or after their recovering from the reaction mixture.
The **-$Ar^1$-NIdppp-X** or **-$Ar^1$-NIdppe-X** modified particles are purified by redispersion in anhydrous freshly distilled toluene or THF followed by centrifugation at 5000 rpm for 15 min. The resulting **-$Ar^1$-Nidppp-X** or **-$Ar^1$-NIdppe-X** modified particles can be directly used for the polymerization of monomers **19** to **35.**

Method B 1): utilization of Ni(O) compounds

The preparation of initiator sites is performed by adding Ni(0) compounds, such as $Ni(PAr_3)_4$ or $Ni(PR_3)_4$, preferably $Ni(PPh_3)_4$, dissolved in an appropriate solvent to **-Ar-X** modified particles to form in particular -$Ar^1$-$Ni(PPh_3)_2$-X

functionalized particles. Alternatively, $Ni(CO)_4$ or $Ni(COD)_2$ can be used as Ni(0) source compounds instead of $Ni(PAr_3)_4$ or $Ni(PR_3)_4$. In this case an equimolar amount or slight excess of bidentate ligands **13** to **17,** preferably dppp or dppe, is added simultaneously with Ni(0) compounds, or right after their addition. Still alternatively, a mixture of $NidpppCl_2$ (one mole) and EtMgCl or MeONa (two moles) is used as a Ni(0) source. The dispersion containing the particles, Ni(0) compounds, solvent and (optionally) added ligands **13** to **17** is stirred to complete the preparation of the initiated sites during sufficient time that depends on the reactivity of Ni(0) compounds and the reaction temperature employed. The resulting particles are separated from the reaction mixture by centrifugation. The modified particles are purified from unattached catalyst by redispersion in anhydrous freshly distilled THF, or toluene followed by centrifugation at 5000 rpm for 15 min or collection by magnetic fields in case of magnetic core particles.

The best results were obtained in cases when polymerization was performed from the particles having -$Ar^1$-Nidppp-X initiator sites prepared by methods A 2), B 2) and B 5), wherein the amount of ungrafted polymer molecules was relatively lower. In contrast, other methods result in a higher amount of ungrafted polymers when forming the same **-$Ar^1$-Nidppp-X** initiator sites, most likely, due to lower selectivity at the initiator immobilization stage.

Carrying out the two-stage preparation of the initiator sites results in a selective grafting of high quality pi-conjugated polymers from the surface of the particles. If the step of the replacement of the bipy ligand is omitted and the polymerization is initiated by the particles having Nibipy catalytic sites, the polymerization results in a larger amount of pi-conjugated polymers which are not attached to a surface of the particles compared to the use of e.g. Nidppp. Thus, the most efficient method of the development of the initiator sites on the surface of the particles is method A 2) that includes preparation of **-$Ar^1$-Nibipy-X** in the first stage followed by replacement of bipy by the dppp or dppe thereby forming **-Ae-Nidppp-X** or **=$Ar^1$ -Nidppe-X.**

The rate of the polymerization from the particles modified with dppp- or dppe- supporting initiators strongly depends on the temperature and kind of a propagation monomer employed. At otherwise the same reaction conditions, the highest polymerization rate is observed for thiophene-based monomers and using Z = MgCl and X = Br. Replacement of MgCl by MgBr, ZnCl or ZnBr as well as replacement of Br by I in X slows down the reaction rate.

General polymerization (grafting-from) procedure

To grow polymer chains (polymer shell) consisting of pi-conjugated polymers, the solution of the respective **Z-$Ar^2$-X** monomer (**19** to **35**) is injected to the **-$Ar^1$-NiL-X** modified particles prepared either by methods A) or methods B). Optionally, mixtures of monomers are used in the polymerizations or several monomers can be added consecutively to the particles.

Polymerization of propagation monomers **19 to 35** in the presence of modified particles is performed by stirring at temperature range from 0 to 100°C, preferably at room temperature (RT), especially preferably at a temperature of 20°C to 25°C. After the polymerization, the mixture is quenched by 5 M HCl and the particles are separated by centrifugation. Purification procedure of the particles includes consecutive redispersion of the particles in various solvents followed by separation using centrifugation or by magnetic fields for the magnetic core particles. The following solvents or solutions in the following sequence were used for the purification: ammonia solution (1 %), hydrazine solution in water (1 %), water, methanol, hot chloroform (3 times), hot THF. Finally, the particles are dried in vacuum to give particles modified with pi-conjugated polymer shell. The particles are characterized by TGA, FTIR, UV-Vis (for dispersions in chloroform, THF and films), $^1$H NMR, SEM, TEM.

The invention will now be illustrated in detail with reference to the examples which follow:

Example 1: Synthesis of [2-(4-bromo-phenyl)-ethyl]-triethoxy-silane (20)

Hydrosilylation was carried out by adding triethoxysilane (100 g) to 4-bromostyrene (18.3 g, 0.1 mol) dropwise in the presence of 160 mg of chloroplatinic acid (2 mL of 1:1 ethanol/diethyl ether solution) as a catalyst and stirring for 1 h. After the excess of triethoxisilane was removed by vacuum distillation, the oily residue was fractionized by vacuum distillation. The resulting product is a mixture of Markovnikov and anti-Markovnikov adducts.

Example 2: Preparation of 500 nm bromophenylethylsilica particles (silica particles modified with silane-20)

The monodispersed spherical silica particles were prepared by the hydrolysis of TEOS according to the following procedure. Three solutions, I (containing 11.25 mL of TEOS in 67.5 mL of ethanol), II (containing 1.875 mL of TEOS, 2.92 g of silane-**20** and 22.5 mL of ethanol), and III (containing 28.5 mL of 25 % ammonia in water and 150 mL of ethanol), were prepared separately. The solutions I and II were consecutively added to the solution III, with the rate 0.5 mL/min under an argon blanket into a round-bottom flask under stirring at 440 $min^{-1}$ and stirred overnight at room temperature. The dispersion was then transferred out of the reactor, and the powders were washed with ethanol and ultrapure water by repeated centrifugation at 5000 rpm for 15 min and further dried at 70°C for 12 h.

Example 3: Grafting of rrP3HT from the 500 nm bromophenylethylsilica particles

The monomer **19** was prepared as follows: 2-bromo-3-hexyl-5-iodothiophene (5.59 g, 15 mmol) was placed in a round-bottomed flask equipped with a magnet stirrer bar, and the atmosphere was replaced with argon. Dry THF (200 mL) and tert-butylmagnesium chloride (1 M solution, 16 mL, 16 mmol) were added via a syringe and the mixture was stirred at room temperature for 1 h.

The initiating sites on the 500 nm bromophenylethylsilica particle were prepared by the two-step procedure using $Et_2$Nibipy in the first modification step and dppp ligand in the second stage (see the two-steps method A 2)). The grafting of rrP3HT was performed according to the "general polymerization procedure" during 3 hours at RT. The resulting particles after extensive removal of unattached material by repeated dispersion/centrifugation steps in the solid state had, essentially, the same appearance as high molecular weight P3HT, namely a black colour. TGA reveals that the attached P3HT constitutes approximately 13 % of the whole particles mass that corresponds to about 20 nm thick P3HT shell in the dry state (taking into account difference in mass density for P3HT and organosilica of 1.7). This data corresponds to SEM data showing increase of the mean diameter when going from unmodified organosilica particles to the P3HT-modified particles from ~500 nm to ~540 nm.

Alternatively, the modification of the 500 nm bromophenylethylsilica particles with P3HT was attempted using the one-step method A 1) for the preparation of the initiated sites. To this end, the 500 nm bromophenylethylsilica particles were treated only with $Et_2$Nibipy (without addition of dppp), afterwards, monomer **19** was injected and the polymerization was performed according to the "general polymerization procedure" during 3 hours at RT. However, in this case more than 90 % of the monomer **19** (by weight) was consumed for the polymerization of P3HT that is not grafted to the particles (as determined by weighting of P3HT that was not grafted to the particles). Furthermore, the light violet colour of the resulting particles obtained after the separation from the unattached polymer indicates marginal grafting of P3HT (versus black for the hibrid particles which preparation included the two-steps Method A). TGA confirms that from 2 nm to 5 nm of P3HT was grafted when the one-step method B was used for the preparation of the initiating sites.

Example 4: Grafting of rrP3DDT from the 500 nm bromophenylethylsilica particles

The initiating sites on the 500 nm bromophenylethylsilica particle were developed by the two-step procedure using $Et_2$Nibipy in the first modification step and dppp ligand at the second stage (see the two-steps method A 2)). The grafting of rrP3DDT was performed according to the "general polymerization procedure" during 3 hours at RT. TGA reveals that attached P3HT constitutes approximately 17 % of the whole particles mass that corresponds to about 25 nm thick P3HT shell in a dry state (taking into account difference in mass density for P3HT and organosilica of 1.7). Analysis of the SEM images reveals the increase of the particle diameter from ~500 nm to ~550 nm.

Example 5: Magnetic 100 nm bromophenylethylsilica particles with ferromagnetite core

Magnetic $Fe_3O_4$/organosilica core-shell particles were obtained according to a modified Stober-Rosenzweig method (Rosenzweig et al., Langmuir 2005, 21, 7524). In the first step, 10 nm citric acid-stabilized $Fe_3O_4$ particles were prepared by the general method based on the basic co-hydrolysis of $Fe^{2+}$ and $Fe^{3+}$ salts. In particular, 500 ml of 0.5 M ammonia solution in water was slowly added to a mixture containing 40 mL of 1 M $FeCl_3$ and 10 mL of 2 M $FeCl_2$. To purify the resulting magnetite particles, they were collected by magnet and the excess water was removed. This procedure was repeated three times and 5 mL of 0.1 M solution of citric acid was added. The resulting stabilized particles were purified by dialysis against deionized water.

To prepare organosilica shell around the $Fe_3O_4$ core, the solution of 30 mg of $Fe_3O_4$ dispersed in 6.5 mL of water was added to a mixture of 100 mL ethanol and 2 mL concentrated ammonia, followed by 2 mL TEOS. The particles were allowed to grow for 24 hours. After that, 0.5 mL of silane-20 was added. After 24 hours functionalized particles were separated by centrifugation and purified by several redispersion in ethanol/centrifugation cycles.

Example 6: Grafting of rrP3HT from the 100 nm magnetic-bromophenylethylsilica particles

The initiating sites on the 100 nm magnetic-bromophenylethylsilica particles were developed by the two-step procedure using $Et_2$Nibipy in the first modification step and dppp ligand at the second stage (see the two-steps method A 2)). The grafting of rrP3HT was performed according to "general polymerization procedure" during 3 hours at RT. Analysis of the SEM images reveals the increase of the particle diameter from ~100 nm to ~140 nm.

Example 7: 30 nm bromophenylethylsilica particles with gold nanoparticle core

Colloidal gold was prepared via the citrate reduction method. To a flask containing 94 mL of boiling distilled

deionized water, $HAuCl_4$ solution (1 mL, 5x10$^{-4}$ M) was added, and the solution allowed to come to the boil. A freshly prepared solution of sodium citrate (5 mL, 3x10$^{-2}$ M) was then added to the flask. After a few minutes, the solution turned from colourless to grey/blue and eventually to a deep wine-red colour due to the formation of colloidal gold. The sol was left overnight for cooling. Silica-coated gold colloids were prepared as follows. First, a surface primer layer with a pendant trimethoxysilane functionality was attached to the Au surface by adding 0.25 mL of a freshly prepared 1 mM aqueous solution of APTMS to 50 mL of the colloidal gold sol under vigorous stirring. The sol was left to stand for 15 min to achieve hydrolysis of the surface methoxysilane groups and formation of vitreophilic Au nanoparticles. Second, 2 mL of silicic acid solution was added to the functionalized sol under vigorous stirring, and the mixture was kept for at least 36 h to produce an approximately 2 nm thick coating ("subshell") of silica around the gold nanoparticles. A shell of organosilica was synthesized around the primed nanoparticles by cocondensation using the Stöber process. Typically, 50 mL of the silica-coated colloidal gold was added to a mixture of 200 mL of ethanol and 1 mL of $NH_4OH$ (25%). A 0.15 mL portion of [2-(4-bromo-phenyl)-ethyl]-triethoxi-silane was added dropwise under vigorous stirring, and the sol left under mild magnetic stirring for at least 12 h at room temperature. The sols remained red in colour, with no visible evidence for flocculation. The sol was then dialyzed for a second time against distilled deionized water for 24 h, to ensure no soluble silicate species remained in situ.

Example 8: Grafting of rrP3HT from the 70 nm bromophenylethylsilica particles with gold nanoparticle core

The initiating sites on the 30 nm bromophenylethylsilica particles with gold nanoparticle core were prepared by the two-step procedure using $Et_2$Nibipy in the first modification step and dppp ligand at the second stage (see the two-steps Method A 2)). The grafting of rrP3HT was performed according to "general polymerization procedure" during 3 hours at RT. Analysis of the SEM images reveals more than twice increase of the nanoparticle diameter from -30 nm to -70 nm.

Example 9: Modification of 500 nm silica particles with PS(Br)-co-P4VP

In this Example is used PS(Br)-co-P4VP having 21 % (by weight) of 4VP units acting here as anchoring-to-silica groups, obtained by usual AIBN-initiated radical polymerization route. To immobilize PS(Br)-co-P4VP, 1g of the dispersion of the 500 nm silica particles obtained by the Stöber method in 50 mL of chloroform were combined with 30 mL 1 % chloroform solution of PS(Br)-co-P4VP and the resulting mixture was stirred during 1 hour. After that, the solvent was removed and the solid was annealed in inert atmosphere at 110°C during 1 hour. The resulting solid was redispersed in chloroform and the particles were separated by centrifugation. The purification procedure was repeated twice.

Example 10: Grafting of rrP3HT from the 500 nm silica particles modified with PS(Br)-co-P4VP

The 500 nm silica particles modified with PS(Br)-co-P4VP were used as a support for grafting of rrP3HT. In the first step, initiating sites were developed by the two-step procedure using $Et_2$Nibipy in the first modification step and dppp ligand at the second stage (see the two-steps method A 2)). The grafting of rrP3HT was performed according to "general polymerization procedure" during 3 hours at RT. Analysis of the SEM images reveals the increase of the nanoparticle diameter from ~500 nm to ~535 nm.

Example 11: 100-500 μm PS(Br)-coDVB particles prepared by bromination of PS(Br) microparticles

100-500 μm PS(Br)-co-DVB (DVB is divinylbenzene) particles were prepared by the method described by F. Davis (Polymer chemistry: a practical approach, Edited by FJ Davis, Oxford University Press, Oxford, 2004, ISBN 0-19-850309-1, p. 248).

Afterwards, the particles were brominated by the modified Naarmann et al. method (US4,143,221). Particularly, 50 g of PS-DVB beads was dispersed in 500 mL of $CHCl_3$, 10 mL of bromine was added, mixed overnight, separated by filtration, washed with $CHCl_3$, ethanol, $NaHSO_3$ solution, water, dried in vacuum.

Example 12: Grafting of rrP3HT from the 100-500 μm brominated PS-coDVBparticles

The initiating sites on 100-500 μm brominated PS-coDVB particles were developed by the two-step procedure using $Et_2$Nibipy in the first modification step and dppp ligand at the second stage (see the two-steps method A 2)). The grafting of rrP3HT was performed according to "general polymerization procedure" during 3 hours at RT.

Example 13: Preparation of 50 nm PS(Br) nanoparticles

50 nm PS(Br) nanoparticles were prepared by emulsion polymerization of 4-bromostyrene (PS(Br)). To this end, a glass quart bottle sealed with a rubber septum and Teflon liner was charged with a soap solution composed of 423.8 g of deionized water, 0.58 g of tripotassium phosphate, 65.3 g of a 10 % solution of Cl4-18 unsaturated fatty acid potassium salt and 1.2 g of a 47.5 % active dispersion of sodium naphthalenesulfonateformaldehyde. The pH of the soap solution was adjusted to 10.5-11.0 with 20 % potassium hydroxide solution. To the bottle was added an activator solution composed of 10 g of water, 0.30 g of hydroxymethanesulfinic acid monosodium salt dihydrate, and 0.09 g of sodium ferric ethylenediaminetetraacetate trihydrate. 181.8 g of styrene and 68.2 g of 55 % divinylbenzene were then added to the bottle, and the mixture was purged with nitrogen gas for 5 min to remove oxygen. The bottle was sealed and placed in water bath having a temperature of 10°C and rotated at 20 rpm. When the contents of the bottle reached bath temperature, 0.69 g of a 40 % active pinane hydroperoxide was added. The reaction was allowed to proceed until the solids content reached a plateau of 30 % solids. The coagulation and isolation of the polymer particles were performed by adding 15 g of NaCl to 2 kg of water. The pH of the solution was lowered to between 3 and 4 with an 18 % sulfuric acid solution. The latex was slowly added to the coagulation solution under rapid stirring. During the addition of latex, the pH was maintained between 3 and 4. After coagulation the polymer was washed three times with water and placed in a 65°C oven with circulating air to dry. The particles were further dried under vacuum at 70°C overnight.

Example 14: Grafting of rrP3HT from the 50 nm PS(Br) nanoparticles

50 nm PS(Br) nanoparticles were used as support for grafting of rrP3HT. In the first step, initiating sites were developed by the two-step procedure using $Et_2$Nibipy in the first modification step and dppp ligand at the second stage (see the two-steps method A 2)). The grafting of rrP3HT was performed according to "general polymerization procedure" during 3 hours at RT. Analysis of the SEM images reveals the increase of the nanoparticle diameter from ~50 nm to ~ 90 nm.

Example 15: Grafting of poly[3-(6-bromohexyl)thiophene], rrP3BrHT, from the 500 nm bromophenylethylsilica particle - Water-soluble hybrid particles with conjugated polyelectrolyte shell

The initiating sites on the 500 nm bromophenylethylsilica particle were developed by the two-step procedure using $Et_2$Nibipy in the first modification step and dppp ligand at the second stage (see the method A 2)). The grafting of rrP3BrHT was performed according to the "general polymerization procedure" using 2-bromo-5-chloromagnesio-3-bromohexylthiophene monomer during 3 hours at RT. Analysis of the SEM images reveals the increase of the particle diameter from ~500 nm to ~540 nm. The bromohexyl side groups were quaternized by trimethylamine close to the method described by McCullough et al. (Macromolecules 2003, 36, 61-64; Macromolecules 2003, 36, 7114-18). To this end, 1 g of the dispersion of the 500 nm bromophenylethylsilica particles with rrP3BrHT shell were dispersed in the mixture containing 50 mL of THF, 50 mL of nitromethane and 10 mL of trimethylamine solution in water (25 %). The dispersion was then heated for 3 days in a closed thick-wall vessel at 100°C. Afterwards, the solvents were removed by vacuum evaporation. Purification of the particles was performed by repeating dispersion in THF/centrifugation cycles. The resulting particles are poorly dispersible in organic solvents (THF, chloroform), but readily dispersible in water.

Example 16: Grafting of poly(2,6-(4,4-bis-dodecyl-4*H*-cyclopenta[2,1-b;3,4-b']-dithiophenes) (PDCPDT) from the 500 nm bromophenylethylsilica particle

The initiating sites on the 500 nm bromophenylethylsilica particle were developed by the two-step procedure using $Et_2$Nibipy in the first modification step and dppp ligand at the second stage (see the two-steps method A 2)). The grafting of PDCPDT was performed according to the "general polymerization procedure" during 3 hours at RT using propagation monomer **29** (R1=R2=dodecyl). Analysis of the SEM images reveals the increase of the particle diameter from ~500 nm to ~540 nm.

Example 17: Grafting of poly-rrP3HT-co-DCPDT random copolymer from the 500 nm bromophenylethylsilica particle

The initiating sites on the 500 nm bromophenylethylsilica particle were developed by the two-step procedure using $Et_2$Nibipy in the first modification step and dppp ligand at the second stage (see the two-steps Method A 2)). The grafting of rrP3HT and PDCPDT was performed according to the "general polymerization procedure" during 3 hours at RT via simultaneous addition of monomers **19** and **29** (R1=R2=dodecyl). Analysis of the SEM images reveals the increase of the particle diameter from ~500 nm to ~535 nm.

Example 18: Grafting of rrP3HT-bi-PDCPDT block copolymer from the 500 nm bromophenylethylsilica particle

The initiated sites on the 500 nm bromophenylethylsilica particle were obtained by the two-step procedure using $Et_2$Nibipy in the first modification step and dppp ligand at the second stage (see the two-steps method A 2)). The grafting of rrP3HT and PDCPDT was performed according to the "general polymerization procedure" at RT via sequential addition of monomer **19** followed by **29** (R1=R2=dodecyl). The second monomer **29** was added after the first monomer **19** was polymerized during 30 minutes. The overall polymerization time was 3 hours. Analysis of the SEM images reveals the increase of the particle diameter from ~500 nm to ~535 nm.

Example 19: Grafting of poly-DCPDT-co-BT random copolymer from the 500 nm bromophenylethylsilica particle

The initiating sites on the 500 nm bromophenylethylsilica particle were obtained by the two-step procedure using $Et_2$Nibipy in the first modification step and dppp ligand at the second stage (see the two-steps Method A 2)). The grafting of PDCPDT and polybenzothiadiazole (PBT) was performed according to the "general polymerization procedure" at RT via sequential addition of monomer **29** (R1=R2=dodecyl) followed by 31. The second monomer **31** was added after the first monomer **29** was polymerized during 30 minutes. The overall polymerization time was 3 hours. Analysis of the SEM images reveals the increase of the particle diameter from ~500 nm to ~535 nm.

Example 20: Grafting of rrP3HT-bl-(DCPDT-co-BT) copolymer from the 500 nm bromophenylethylsilica particle

The initiating sites on the 500 nm bromophenylethylsilica particle were developed by the two-step procedure using $Et_2$Nibipy in the first modification step and dppp ligand at the second stage (see the two-steps Method A 2)). The grafting of rrP3HT followed by PDCPDT and PBT was performed according to the "general polymerization procedure" at RT via sequential addition of monomer **19** followed by the mixture of the monomers **29** (R1=R2=dodecyl) and **31.** The mixture of the monomers **29** and **31** was added after the first monomer **19** was polymerized during 30 minutes. The overall polymerization time was 3 hours. Analysis of the SEM images reveals the increase of the particle diameter from ~500 nm to ~535 nm.

These studies indicate that the synthesis strategy can be used to prepare a new class of inorganic-organic as well as organic-organic hybrid nanoparticles which can be functionalized with polymer molecules of various pi-conjugated polymers and (co)polymers of different structure. Since the process is a "quasi-living" polymerization, the attributes of this strategy are numerous including exceptional control over polymer chain length, chemical composition, particle size, solubility and shape of hybrid particles.

## Claims

**1.** Method for preparing hybrid particles comprising the steps of:

a) providing particles having a plurality of $Ar^1$-X groups on their surface;
b) preparing initiated sites $Ar^1$-NiL-X on the surface of the particles from step a) using Ni(II) or Ni(0) compounds, and
c) contacting the particles from step b), with propagation monomers of the general formula Z- $Ar^2$-X to form polymer chains that are attached to the particles,

wherein
$Ar^1$ and $Ar^2$ are independently selected from substituted or unsubstituted aryl or heteroaryl groups,
L represents two monodentate ligands which are selected from the group consisting of triarylphosphine ($PAr_3$), trialkylphosphine ($PR_3$) and combinations thereof; or L represents a bidentate ligand which is selected from the group consisting of 2,2'-bipyridyl (bipy), α-N,N'-diaryl-acenaphthenediimine (daadi), [1,3-bis(diphenylphosphino) propane] (dppp), 1,2-bis(diphenylphosphino)ethane (dppe), [1,1'-bis(diphenylphosphino)ferrocene] (dppf);
Z is XMg, XZn or Li;
X is a halogen; and
R is a substituted or unsubstituted $C_1$-$C_{30}$ alkyl,
wherein the preparation of the initiated sites -$Ar^1$-NiL-X on the surface of the particles in step b) is carried out by:

using Ni(II) compounds by reacting $Et_2$Ni(II)bipy or $R_2$Ni(daadi) with -$Ar^1$-X to form -$Ar^1$-Nibipy-X or -$Ar^1$-Ni (daadi)-X and, preferably, then subsequently adding ligand L to form -$Ar^1$-NiL-X; or

using Ni(0) compounds by reacting $Ni(PAr_3)_4$, $Ni(PR_3)_4$, with $-Ar^1-X$ to form $-Ar^1-Ni(PAr_3)_2-X$ or $-Ar^1-Ni(PR_3)_2-X$; or

using Ni(0) compounds by reacting $Ni(PAr_3)_4$, $Ni(PR_3)_4$, with $-Ar^1-X$ to form $-Ar^1-Ni(PAr_3)_2-X$ or $-Ar^1-Ni(PR_3)_2-X$ in the presence of ligand L to form- $Ar^1-NiL-X$ on the surface of the particles; or

using Ni(0) compounds by reacting $Ni(CO)_4$ or $Ni(COD)_2$ with $-Ar^1-X$ in the presence of ligand L to form $-Ar^1-NiL-X$ on the surface of the particles; or

using in-situ generated Ni(0) compounds by reacting $Ni(L)X_2$, preferably $Ni(PAr_3)_2X_2$ or $Ni(PR_3)_2X_2$, with $-Ar^1-X$ in the presence of ligand L and a reduction compound which reduces Ni(II) to Ni(0), wherein the reduction compound is a metal or metal-containing compound; or

using in-situ generated Ni(0) compounds obtained in an electrochemical reduction of $Ni(L)X_2$ with a subsequent reaction of the formed Ni(0) compounds with $-Ar^1-X$ in an electrochemical cell; and wherein the ligand L is selected from the group consisting of [1,3-bis (diphenylphosphino) propane] (dppp), 1,2-bis(diphenyl-phosphino) ethane (dppe), [1,1'-bis(diphenyl-phosphino) ferrocene] (dppf), and combinations thereof.

**2.** The method according to claim 1, wherein the aryl and heteroaryl groups comprise at least one five-membered or six-membered saturated or unsaturated carbon ring, and wherein the at least one five-membered or six-membered saturated or unsaturated carbon ring of the heteroaryl groups contains at least one heteroatom selected from S and N.

**3.** The method according to claim 1 or 2, wherein at least two different propagation monomers with the general formula $Z-Ar^2-X$ are used in step c), and wherein the at least two propagation monomers are added simultaneously, sequentially or after each other.

**4.** The method according to any of the preceding claims, wherein the propagation monomers of the general formula $Z-Ar^2-X$ are selected from the group consisting of:

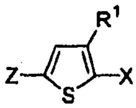
19

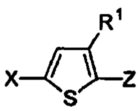
20

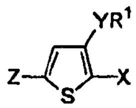
21

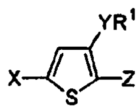
22

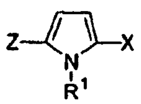
23

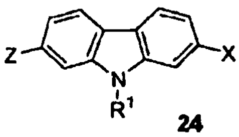
24

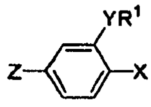
25

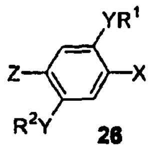
26

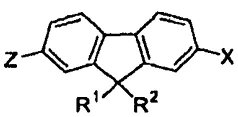
27

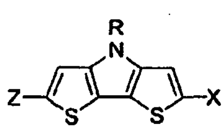
28

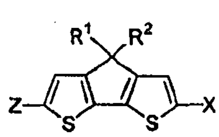
29

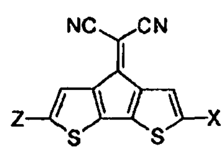
30

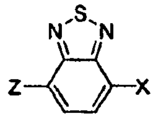
31

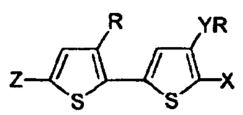
32

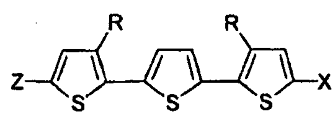
33

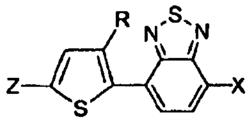

34

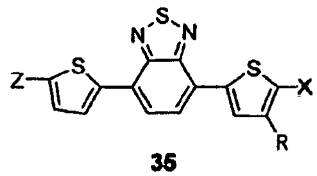

35

, wherein Z is X-Mg or X-Zn;

Y is selected from 0, S and NR;
R is a substituted or unsubstituted $C_1$-$C_{30}$ alkyl group or a halide; and
X is a halogen.

5. The method according to any of the preceding claims, wherein ligand L is a bidentate ligand, preferably the ligand L is [1,3-bis(diphenylphosphino) propane] (dppp) or 1,2-bis(diphenylphosphino) ethane (dppe).

6. The method according to any of the preceding claims, wherein the particles are inorganic or organic particles, wherein the inorganic particles are selected from the group consisting of metal oxides, metal hydroxides, organosilica, metals and
metal alloys, semiconductor materials, and silica; and wherein the organic particles are polymer or (co)polymer particles, preferably from cross-linked polybromostyrene, polybromostyrene copolymerized with vinylpyridine or polybromostyrene copolymerized with glycidylmethacrylate.

7. The method according to claim 6, wherein the inorganic particles are selected from the group consisting of metal oxide particles, preferably made from ZnO or $TiO_2$, semiconductor particles, preferably made from CdSe, and unmodified or modified silica particles.

8. The method according to any of the preceding claims, wherein the particles have a diameter between 1 nm and 500 μm.

9. Hybrid particle prepared according to the method as defined in any of claims 1 to 8, wherein the propagation monomers of the general formula Z-$Ar^2$-X are selected from the group consisting of:

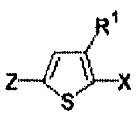

19

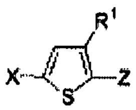

20

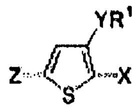

21

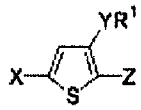

22

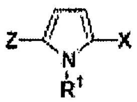

23

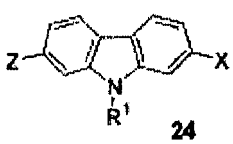

24

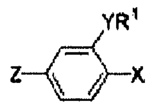

25

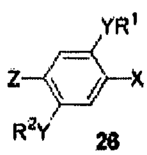

26

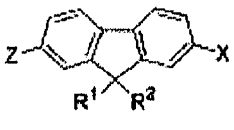

27

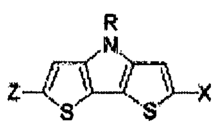

28

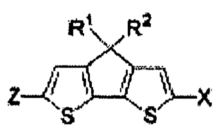

29

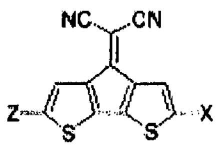

30

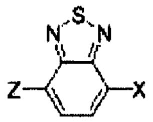

31

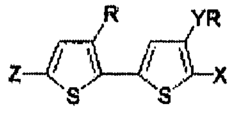

32

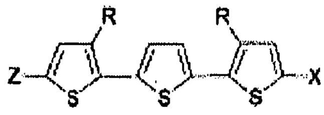

33

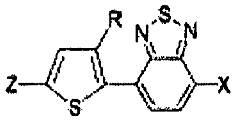

34

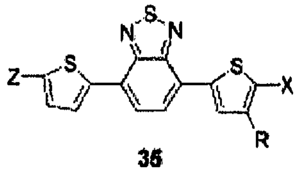

35

wherein Z is X-Mg or X-Zn;

Y is O, S or NR;
R is a substituted or unsubstituted $C_1$-$C_{30}$ alkyl group or a halide;
and X is a halogen.

**10.** The hybrid particle according to claim 9, wherein the graft density of the resulting polymer chains is between 0.01 and 1.0 chains/$nm^2$, preferably the polymer chains have a chain length between 2 and 1000 repeating units.

**11.** The hybrid particle according to claim 9 or 10, wherein the polymer shell of the hybrid particle is selected from the group consisting of homopolmyers, block polymers, random (co)polymers, alternate or gradient (co)polymers or a combination thereof and hyperbranched structures.

**12.** Use of a hybrid particle according to any of claims 9 to 11 in optoelectronic, sensor and solar cell applications.

**13.** Use of a hybrid particle according to claim 12, wherein the solar cells are bulk heterojunction, hybrid- or dye-sensitized solar cells.

**14.** Solar cell containing hybrid particles according to any of claims 9 to 11.

## Patentansprüche

**1.** Verfahren zur Herstellung von Hybridteilchen, umfassend die Schritte von:

a) Bereitstellen von Teilchen mit einer Vielzahl von Resten -$Ar^1$-X auf ihrer Oberfläche;
b) Herstellen von Initiatorstellen -$Ar^1$-NiL-X auf der Oberfläche der Teilchen von Schritt a) unter Verwendung von Ni(II)- oder Ni(0)-Verbindungen, und
c) Inkontaktbringen der Teilchen von Schritt b) mit Wachstumsmonomeren der allgemeinen Formel Z-$Ar^2$-X, um Polymerketten zu bilden, die an die Teilchen gebunden sind,

wobei
$Ar^1$ und $Ar^2$ unabhängig voneinander aus substituierten oder nicht-substituierten Aryl-oder Heteroarylresten ausgewählt sind,
L zwei einzählige Liganden darstellt, die aus der Gruppe ausgewählt sind, welche aus Triarylphosphin ($PAr_3$), Trialkylphosphin ($PR_3$) und Kombinationen davon besteht; oder L einen zweizähligen Liganden darstellt, der aus der Gruppe ausgewählt ist, welche aus 2,2'-Bipyridyl (bipy), α-N,N'-Diarylacenaphthendiimin (daadi), [1,3-Bis(diphenylphosphino)propan] (dppp), 1,2-Bis(diphenylphosphino)ethan (dppe), [1,1'-Bis(diphenylphosphino)ferrocen] (dppf) besteht;
Z XMg, XZn oder Li ist;

X ein Halogen ist; und
R ein substituiertes oder nicht-substituiertes $C_1$-$C_{30}$-Alkyl ist,
wobei die Herstellung der Initiatorstellen -$Ar^1$-NiL-X auf der Oberfläche der Teilchen in Schritt b) durchgeführt wird:

unter Verwendung von Ni(II)-Verbindungen durch Umsetzen von $Et_2$Ni(II)bipy oder $R_2$Ni(daadi) mit -$Ar^1$-X, um -$Ar^1$-Nibipy-X oder -$Ar^1$-Ni(daadi)-X zu bilden, und bevorzugt dann anschließend Hinzufügen von Ligand L, um -$Ar^1$-NiL-X zu bilden; oder
unter Verwendung von Ni(0)-Verbindungen durch Umsetzen von $Ni(PAr_3)_4$, $Ni(PR_3)_4$ mit -$Ar^1$-X, um -$Ar^1$-Ni $(PAr_3)_2$-X oder -$Ar^1$-$Ni(PR_3)_2$-X zu bilden; oder
unter Verwendung von Ni(0)-Verbindungen durch Umsetzen von $Ni(PAr_3)_4$, $Ni(PR_3)_4$ mit -$Ar^1$-X, um -$Ar^1$-Ni $(PAr_3)_2$-X oder -$Ar^1$-$Ni(PR_3)_2$-X zu bilden, in der Gegenwart von Ligand L, um -$Ar^1$-NiL-X auf der Oberfläche der Teilchen zu bilden; oder
unter Verwendung von Ni(0)-Verbindungen durch Umsetzen von $Ni(CO)_4$ oder $Ni(COD)_2$ mit -$Ar^1$-X in der Gegenwart von Ligand L, um -$Ar^1$-NiL-X auf der Oberfläche der Teilchen zu bilden; oder
unter Verwendung von in situ erzeugten Ni(0)-Verbindungen durch Umsetzen von $Ni(L)X_2$, bevorzugt Ni $(PAr_3)_2X_2$ oder $Ni(PR_3)_2X_2$, mit -$Ar^1$-X in der Gegenwart von Ligand L und einer Reduktionsverbindung, welche Ni(II) zu Ni(0) reduziert, wobei die Reduktionsverbindung ein Metall oder eine metallhaltige Verbindung ist; oder
unter Verwendung von in situ erzeugten Ni(0)-Verbindungen, die erhalten werden in einer elektrochemischen Reduktion von $Ni(L)X_2$, mit einer anschließenden Umsetzung der gebildeten Ni(0)-Verbindungen mit -$Ar^1$-X in einer elektrochemischen Zelle; und wobei der Ligand L aus der Gruppe ausgewählt ist, die aus [1,3-Bis(diphenylphosphino)propan] (dppp), 1,2-Bis(diphenylphosphino)ethan (dppe), [1,1'-Bis(diphenylphosphino)ferrocen] (dppf) und Kombinationen davon besteht.

2. Verfahren gemäß Anspruch 1, wobei die Aryl- und Heteroarylreste mindestens einen fünfgliedrigen oder sechsgliedrigen gesättigten oder nicht-gesättigten Kohlenstoffring umfassen und wobei der mindestens eine fünfgliedrige oder sechsgliedrige gesättigte oder nicht-gesättigte Kohlenstoffring der Heteroarylreste mindestens ein Heteroatom, ausgewählt aus S und N, enthält.

3. Verfahren gemäß Anspruch 1 oder 2, wobei mindestens zwei unterschiedliche Wachstumsmonomere mit der allgemeinen Formel Z-$Ar^2$-X in Schritt c) verwendet werden und wobei die mindestens zwei Wachstumsmonomere gleichzeitig, der Reihe nach oder jeweils nacheinander zugegeben werden.

4. Verfahren gemäß einem der vorhergehenden Ansprüche, wobei die Wachstumsmonomere der allgemeinen Formel Z-$Ar^2$-X aus der Gruppe ausgewählt sind, welche besteht aus:

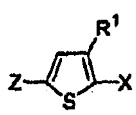
19
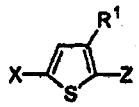
20
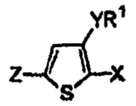
21
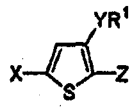
22

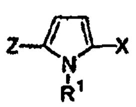
23
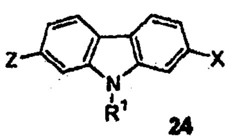
24
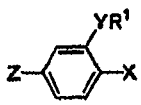
25
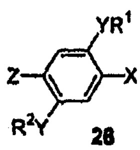
26

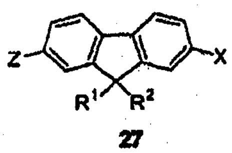
27
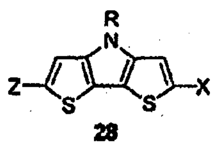
28
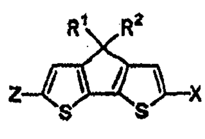
29
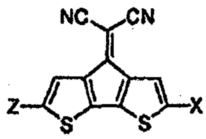
30

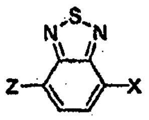

31

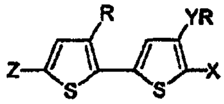

32

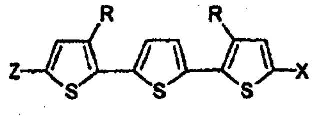

33

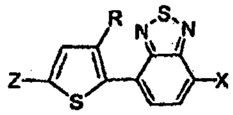

34

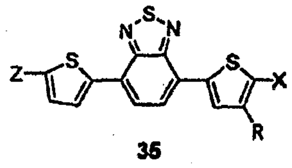

35

wobei Z X-Mg oder X-Zn ist;

Y aus O, S und NR ausgewählt ist;
R ein substituierter oder nicht-substituierter $C_1$-$C_{30}$-Alkylrest oder ein Halogenid ist; und
X ein Halogen ist.

**5.** Verfahren gemäß einem der vorhergehenden Ansprüche, wobei Ligand L ein zweizähliger Ligand ist, wobei der Ligand L bevorzugt [1,3-Bis(diphenylphosphino)propan] (dppp) oder 1,2-Bis(diphenylphosphino)ethan (dppe) ist.

**6.** Verfahren gemäß einem der vorhergehenden Ansprüche, wobei die Teilchen anorganische oder organische Teilchen sind, wobei die anorganischen Teilchen aus der Gruppe ausgewählt sind, die aus Metalloxiden, Metallhydroxiden, Organosilika, Metallen und Metalllegierungen, Halbleitermaterialien und Siliciumdioxid besteht; und wobei die organischen Teilchen Polymer- oder (Co)polymerteilchen, bevorzugt aus vernetztem Polybromstyrol, Polybromstyrol copolymerisiert mit Vinylpyridin oder Polybromstyrol copolymerisiert mit Glycidylmethacrylat sind.

**7.** Verfahren gemäß Anspruch 6, wobei die anorganischen Teilchen aus der Gruppe ausgewählt sind, die aus Metalloxidteilchen, bevorzugt hergestellt aus ZnO oder $TiO_2$, Halbleiterteilchen, bevorzugt hergestellt aus CdSe, und nicht-modifizierten oder modifizierten Siliciumdioxidteilchen besteht.

**8.** Verfahren gemäß einem der vorhergehenden Ansprüche, wobei die Teilchen einen Durchmesser zwischen 1 nm und 500 μm aufweisen.

**9.** Hybridteilchen, hergestellt gemäß dem Verfahren wie in einem der Ansprüche 1 bis 8 definiert, wobei die Wachstumsmonomere der allgemeinen Formel Z-$Ar^2$-X aus der Gruppe ausgewählt sind, welche besteht aus:

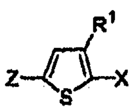

19

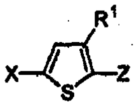

20

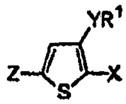

21

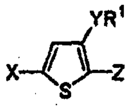

22

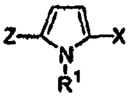

23

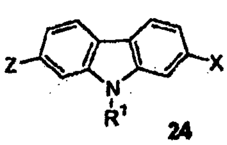

24

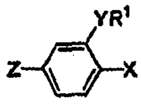

25

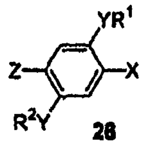

26

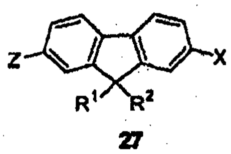
27

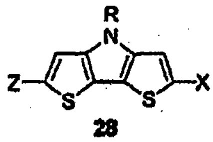
28

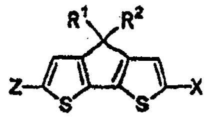
29

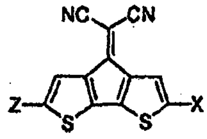
30

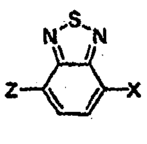
31

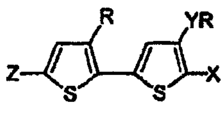
32

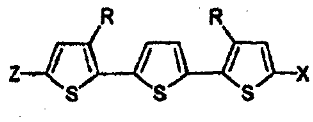
33

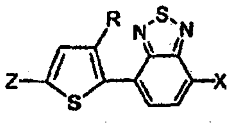
34

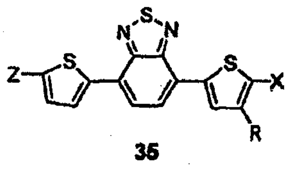
35

wobei Z X-Mg oder X-Zn ist;

Y O, S oder NR ist;
R ein substituierter oder nicht-substituierter $C_1$-$C_{30}$-Alkylrest oder ein Halogenid ist; und
X ein Halogen ist.

**10.** Hybridteilchen gemäß Anspruch 9, wobei die Pfropfdichte der resultierenden Polymerketten zwischen 0,01 und 1,0 Ketten/$nm^2$ liegt, wobei die Polymerketten bevorzugt eine Kettenlänge zwischen 2 und 1000 Wiederholungseinheiten aufweisen.

**11.** Hybridteilchen gemäß Anspruch 9 oder 10, wobei die Polymerhülle des Hybridteilchens aus der Gruppe ausgewählt ist, die aus Homopolymeren, Blockpolymeren, statistischen (Co)polymeren, alternierenden oder Gradienten(co) polymeren oder einer Kombination davon und stark verzweigten Strukturen besteht.

**12.** Verwendung eines Hybridteilchens gemäß einem der Ansprüche 9 bis 11 in optoelektronischen, Sensor- und Solarzellenverwendungen.

**13.** Verwendung eines Hybridteilchens gemäß Anspruch 12, wobei die Solarzellen Bulk-Heteroübergang-Solarzellen, Hybrid-Solarzellen oder Grätzelzellen sind.

**14.** Solarzelle, welche Hybridteilchen gemäß einem der Ansprüche 9 bis 11 enthält.

## Revendications

**1.** Procédé de préparation de particules hybrides, comprenant les étapes consistant à:

a) fournir des particules présentant en surface plusieurs groupes $Ar^1$-X;
b) préparer des sites initiateurs -$Ar^1$-NiL-X à la surface des particules de l'étape a) en utilisant des composés de Ni(II) ou Ni(0), et
c) mettre en contact les particules de l'étape b) avec des monomères de propagation de formule générale Z-

$Ar^2$-X pour former des chaînes polymères qui sont attachées aux particules, dans lequel
$Ar^1$ et $Ar^2$ sont indépendamment choisis parmi les groupes aryle ou hétéroaryle substitués ou non substitués,
L représente deux ligands monodentés qui sont choisis dans le groupe formé de triarylphosphine ($PAr_3$), trialkylphosphine ($PR_3$) et combinaisons de celles-ci, ou L représente un ligand bidenté qui est choisi dans le groupe formé de 2,2'-bipyridyle (bipy), α-N,N'-diaryl-acénaphtènediimine (daadi), [1,3-bis(diphénylphosphino)propane] (dppp), 1,2-bis(diphénylphosphino)éthane (dppe), [1,1'-bis(diphénylphosphino)ferrocène] (dppf);
Z représente XMg, XZn ou Li;
X représente un halogène, et
R représente un alkyle en $C_1$-$C_{30}$ substitué ou non substitué
dans lequel la préparation des sites initiateurs -$Ar^1$-NiL-X à la surface des particules dans l'étape b) est mise en oeuvre :
en utilisant des composés de Ni(II) en faisant réagir $Et_2Ni(II)bipy$ ou $R_2Ni(daadi)$ avec -$Ar^1$-X pour former un groupe -$Ar^1$-Nibipy-X ou -$Ar^1$-Ni(daadi)-x et, de préférence, en ajoutant ensuite le ligand L pour former un groupe -$Ar^1$-NiL-X, ou
en utilisant des composés de Ni(0) en faisant réagir $Ni(PAr_3)_4$, $Ni(PR_3)_4$ avec -$Ar^1$-X pour former -$Ar^1$-$Ni(PAr_3)_2$-X ou -$Ar^1$-$Ni(PR_3)_2$-X, ou
en utilisant des composés de Ni(O) en faisant réagir de $Ni(PAr_3)_4$, $Ni(PR_3)_4$ avec -$Ar^1$-X pour former -$Ar^1$-Ni $(PAr_3)_2$-X ou -$Ar^1$-$Ni(PR^3)_2$-X, en présence du ligand L pour former -$Ar^1$-NIL-X à la surface des particules, ou
en utilisant des composés de Ni(0) en faisant réagir $Ni(CO)_4$ ou $Ni(COD)_2$ avec -$Ar^1$-X en présence de ligand L pour former -$Ar^1$-NIL-X à la surface des particules, ou
en utilisant des composés de Ni(0) générés in-situ en faisant $Ni(L)X_2$, de préférence $Ni(PAr_3)_2X_2$ ou $Ni(PR_3)_2X_2$, avec -$Ar^1$-X en présence du ligand L et d'un composé réducteur qui réduit NI(II) en Ni(0), dans lequel le composé réducteur est un métal ou un composé contenant un métal, ou
en utilisant des composés de Ni(0) générés in-situ obtenus par réduction électrochimique de $Ni(L)X_2$ avec réaction ultérieure des composés de Ni(0) formés avec -$Ar^1$-X dans une cellule électrochimique; et dans lequel le ligand L est choisi dans le groupe constitué de [1,3-bis(diphénylphosphino) propane] (PSPH), 1,2-bis(diphénylphosphino) éthane (DPPE), [1,1'-bis(diphénylphosphino) ferrocène] (dppf), et leurs combinaisons.

2. Procédé selon la revendication 1, dans lequel les groupes aryle et hétéroaryle comprennent au moins un cycle de carbone à cinq chaînons ou six chaînons, saturé ou insaturé, et dans lequel le cycle de carbone au moins présent, à cinq chaînons ou à six chaînons, saturé ou insaturé, des groupes hétéroaryle, contient au moins un hétéroatome choisi parmi S et N.

3. Procédé selon la revendication 1 ou 2, dans lequel au moins deux monomères de propagation différents de formule générale Z-$Ar^2$-X sont utilisés dans l'étape c), et dans lequel les deux monomères de propagation au moins présents sont ajoutés simultanément, en séquence ou l'un après l'autre.

4. Procédé selon l'une quelconque des revendications précédentes, dans lequel les monomères de propagation de la formule générale Z-$Ar_2$-X sont choisis dans le groupe constitué par:

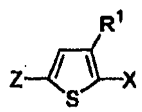
19

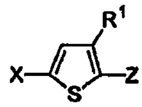
20

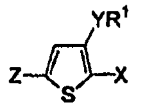
21

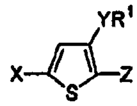
22

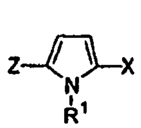
23

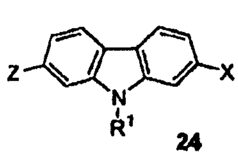
24

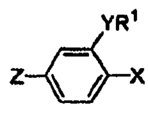
25

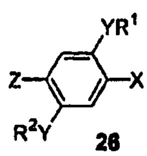
26

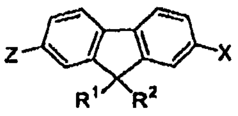

27

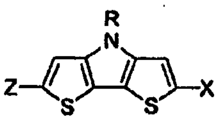

28

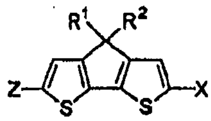

29

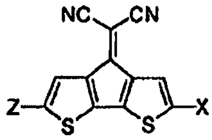

30

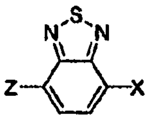

31

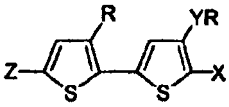

32

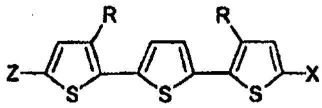

33

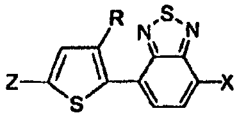

34

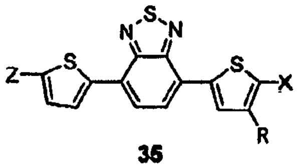

35

dans lesquelles Z représente X-Mg ou X-Zn;

Y est choisi parmi O, S et NR;
R est un groupe alkyle en $C_1$-$C_{30}$ substitué ou non substitué, ou un halogénure, et
X représente un halogène.

**5.** Procédé selon l'une quelconque des revendications précédentes, dans lequel le ligand L est un ligand bidenté, le ligand L est de préférence le [1,3-bis (diphénylphosphino) propane] (dppp) ou le 1,2-bis (diphénylphosphino) éthane (dppe).

**6.** Procédé selon l'une quelconque des revendications précédentes, dans lequel les particules sont des particules inorganiques ou organiques, dans lequel les particules inorganiques sont choisies dans le groupe constitué par les oxydes métalliques, hydroxydes métalliques, organosilice, métaux et alliages métalliques, matériaux semi-conducteurs, et silice, et dans lequel les particules organiques sont des particules de polymères ou (co)polymères, de préférence de polybromostyrène réticulé, de polybromostyrène copolymérisé avec vinylpyridine ou de polybromostyrène copolymérisé avec méthacrylate de glycidyle.

**7.** Procédé selon la revendication 6, dans lequel les particules inorganiques sont choisies dans le groupe constitué de particules d'oxydes métalliques, de préférence en ZnO ou $TiO_2$, de particules semiconductrices, de préférence à base de CdSe, et de particules de silice non modifiée ou modifiée.

**8.** Procédé selon l'une quelconque des revendications précédentes, dans lequel les particules ont un diamètre compris entre 1 nm et 500 μm.

**9.** Particule hybride préparée selon le procédé tel que défini dans l'une quelconque des revendications 1 à 8, dans laquelle les monomères de propagation de formule générale Z-$Ar^2$-X sont choisis dans le groupe constitué par:

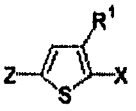

19

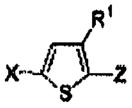

20

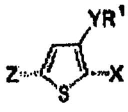

21

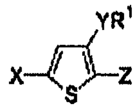

22

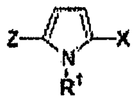

23

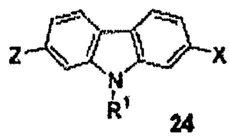

24

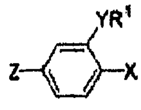

25

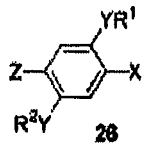

26

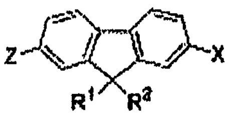

27

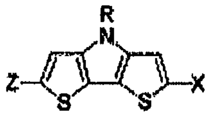

28

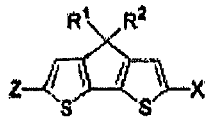

29

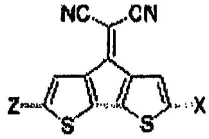

30

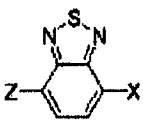

31

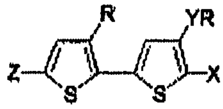

32

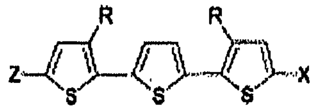

33

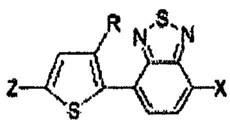

34

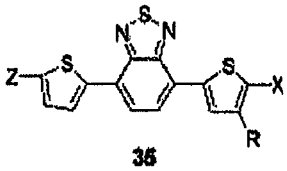

35

dans lesquelles Z représente X-Mg ou X-Zn;

Y représente O, S ou NR;
R représente un groupe alkyle en $C_1$-$C_{30}$ substitué ou non substitué, ou un halogénure;
et X représente un halogène.

**10.** Particule hybride selon la revendication 9, dans laquelle la densité de greffage des chaînes de polymères résultantes se situe entre 0,01 et 1,0 chaîne/nm$^2$, de préférence, les chaînes de polymère ont une longueur de chaîne entre 2 et 1000 unités répétitives.

**11.** Particule hybride selon la revendication 9 ou 10, dans laquelle l'enveloppe polymère de la particule hybride est choisie dans le groupe constitué des homopolymères, polymères séquencés, (co)polymères aléatoires, (co)polymères alternés ou à gradient, ou combinaison de ceux-ci et des structures hyper-ramifiées.

**12.** Utilisation d'une particule hybride selon l'une quelconque des revendications 9 à 11 dans des applications optoélectroniques, capteurs et cellules solaires.

**13.** Utilisation d'une particule hybride selon la revendication 12, dans laquelle les cellules solaires sont des cellules solaires de type réseaux interpénétrés, hybrides ou sensibilisées par colorant.

**14.** Cellule solaire contenant des particules hybrides selon l'une quelconque des revendications 9 à 11.

Fig. 1

**Method A**

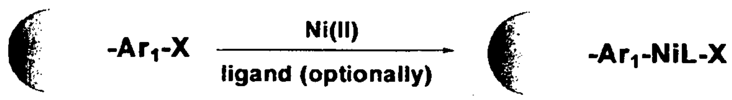


**Method B**

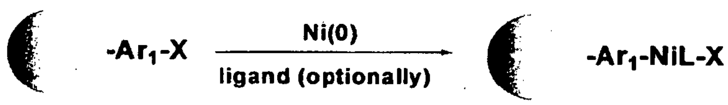


Fig. 2

**Preparation of homopolymer shell**

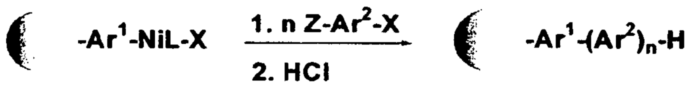


**Preparation of random copolymer shell**

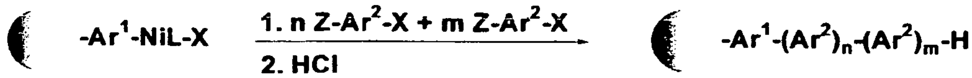


**Preparation of block copolymer shell**

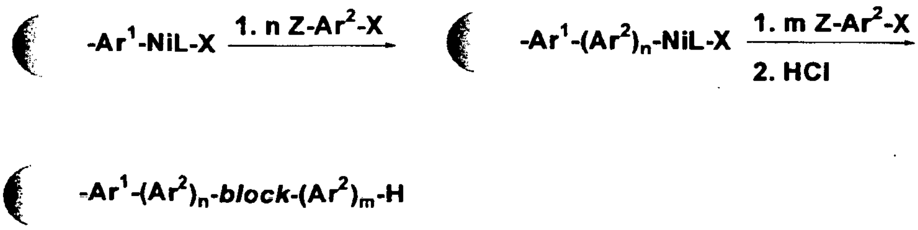

Fig. 3

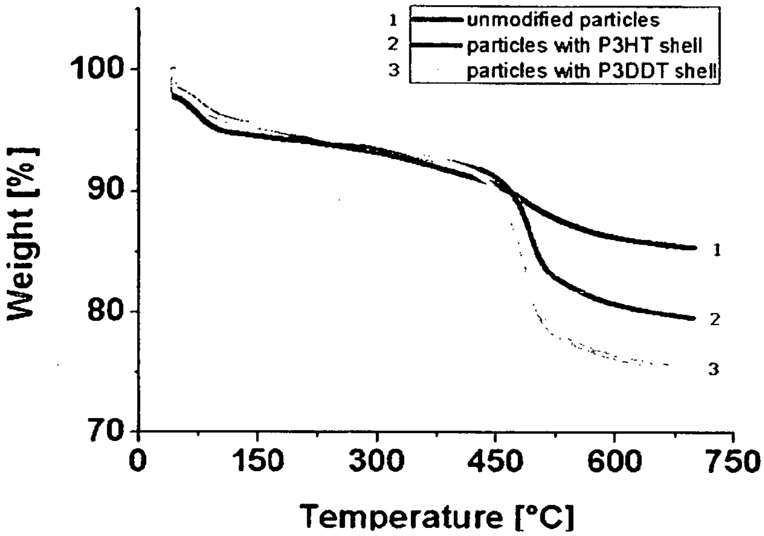
1 unmodified particles
2 particles with P3HT shell
3 particles with P3DDT shell
Weight [%]
100
90
80
70
0
150
300
450
600
750
Temperature [°C]
1
2
3

Fig. 4

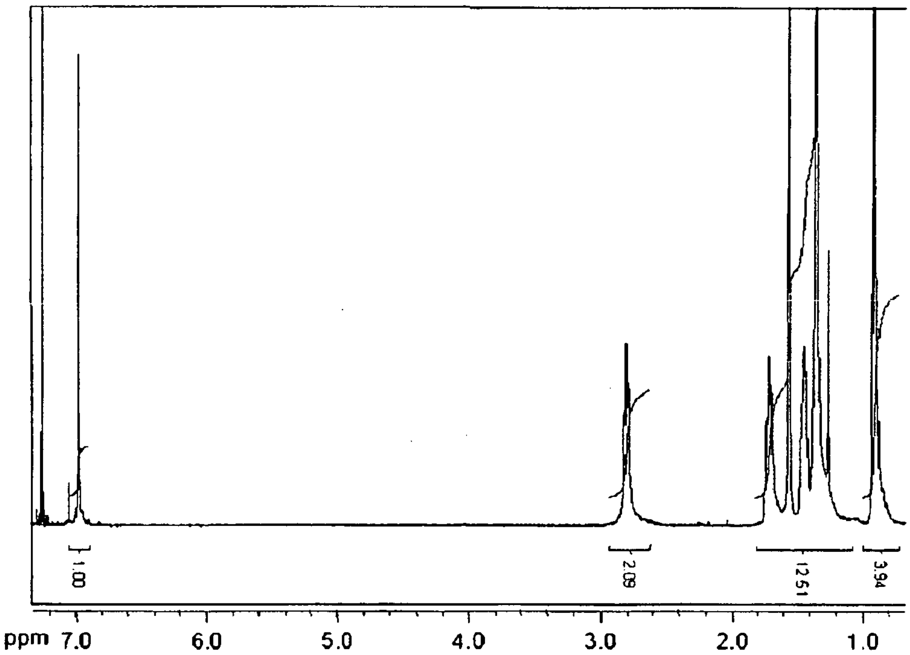
1.00
2.09
12.51
3.94
ppm 7.0
6.0
5.0
4.0
3.0
2.0
1.0

Fig. 5

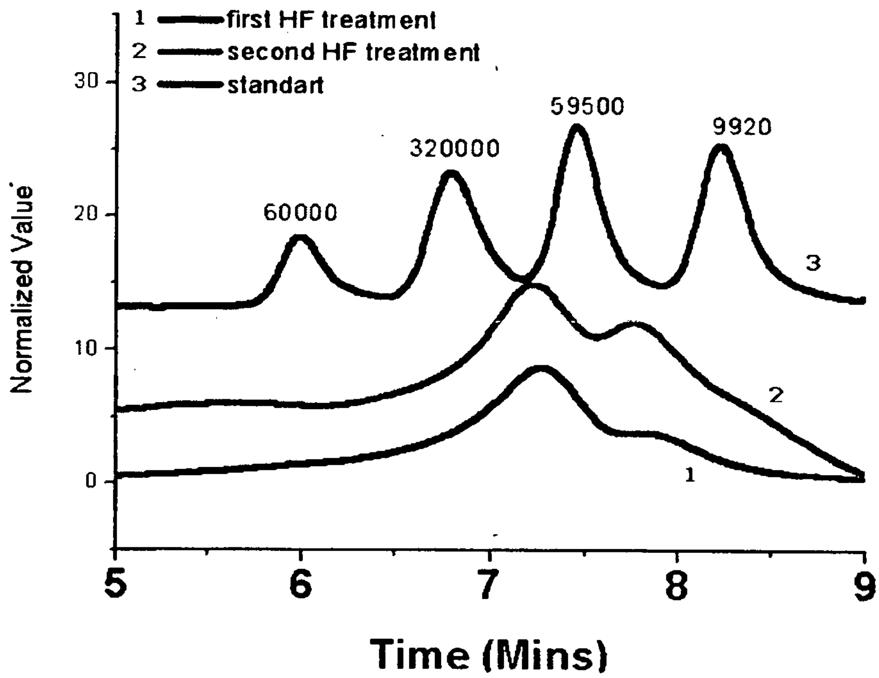
1 first HF treatment
2 second HF treatment
3 standart
60000
320000
59500
9920
3
2
1
Normalized Value
0
10
20
30
5
6
7
8
9
Time (Mins)

Fig. 6

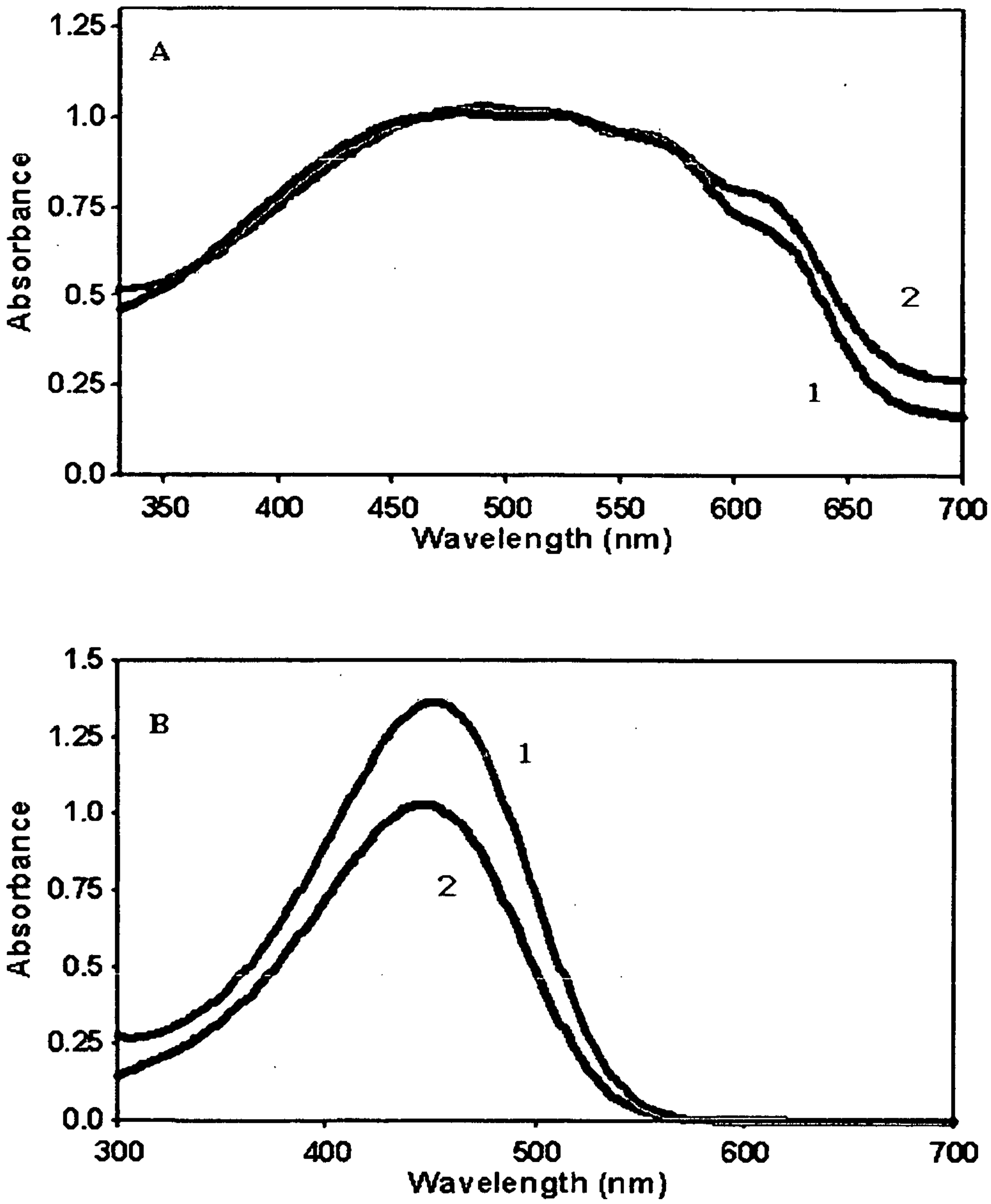
A
1.25
1.0
0.75
0.5
0.25
0.0
Absorbance
350
400
450
500
550
600
650
700
Wavelength (nm)
1
2
B
1.5
1.25
1.0
0.75
0.5
0.25
0.0
Absorbance
300
400
500
600
700
Wavelength (nm)
1
2

Fig. 7

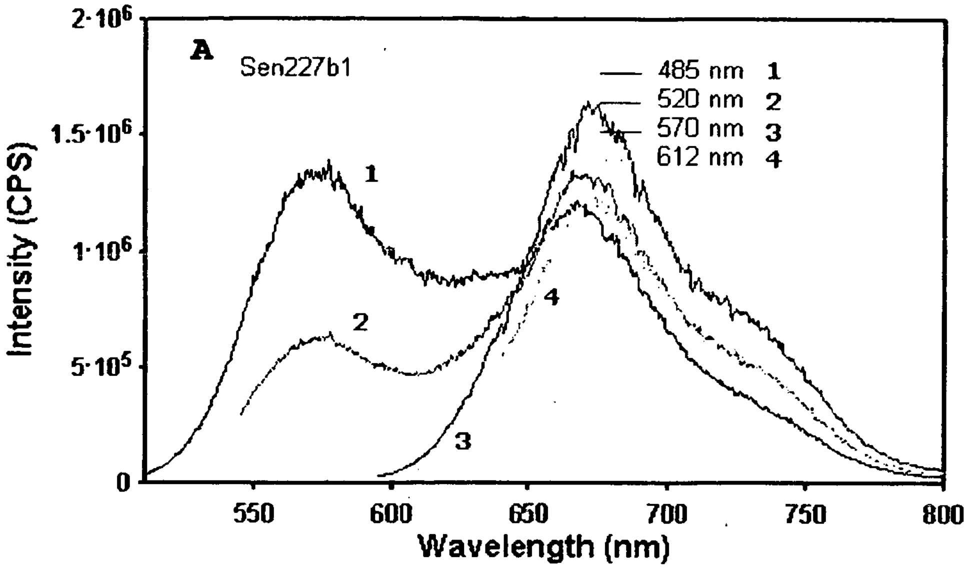
A
Sen227b1
485 nm 1
520 nm 2
570 nm 3
612 nm 4
Intensity (CPS)
Wavelength (nm)
1
2
3
4
2·10^6
1.5·10^6
1·10^6
5·10^5
0
550
600
650
700
750
800

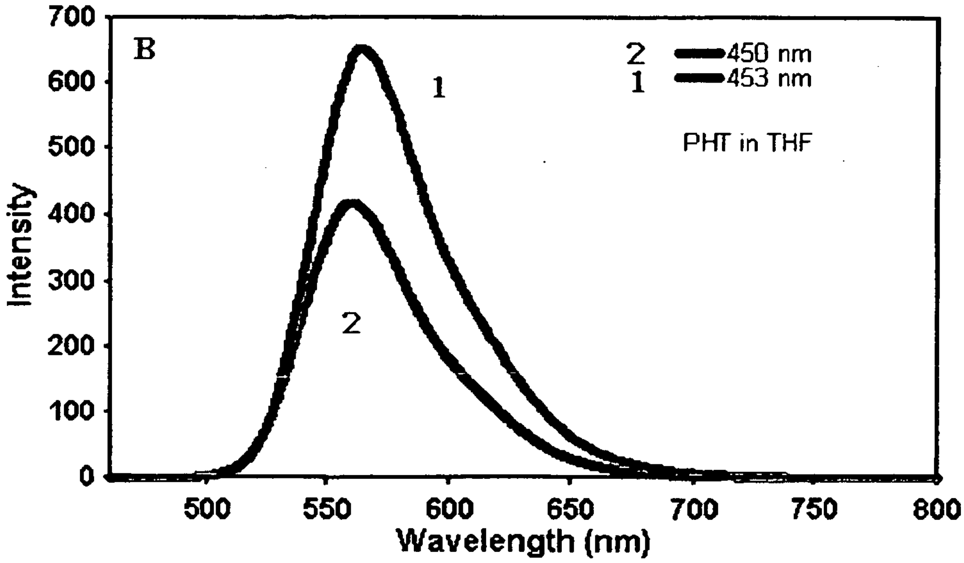
B
2 450 nm
1 453 nm
PHT in THF
1
2
Intensity
Wavelength (nm)
700
600
500
400
300
200
100
0
500
550
600
650
700
750
800

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6025462 A
- US 20060278867 A1
- US 7452958 B, McCullough
- US 7115688 B
- US 6627314 B
- US 7407995 B
- US 5472881 A
- US 5942397 A
- US 6166172 A
- US 6602974 B
- US 4143221 A, Naarmann


### Non-patent literature cited in the description


- **EDMONDSON et al.** *Chem. Soc. Rev.,* 2004, vol. 33, 14
- Handbook of radical polymerization. Wiley-Interscience, 2002
- **FRECHET.** *J. Am. Chem. Soc.,* 2004, vol. 126 (21), 6550
- **EMRICK et al.** *J. Am. Chem. Soc.,* 2004, vol. 126, 11322
- **SCHANZE et al.** *Langmuir,* 2007, vol. 23, 4541
- **KIRIY et al.** *J. Am. Chem. Soc.,* 2007, vol. 129, 6626
- *Macromolecules,* 2005, vol. 38, 8649
- **YOKOZAWA et al.** *J. Am. Chem. Soc.,* 2005, vol. 127, 17542
- **STOBER.** *J. Colloid Menace Sci.,* 1968, vol. 26, 62
- **NOZAWA.** *Langmuir,* 2005, vol. 21, 1516
- **MANN et al.** *Langmuir,* 2000, vol. 16, 1454
- **ROSENZWEIG et al.** *Langmuir,* 2005, vol. 21, 7524
- **NARAYANASWAMY et al.** *J. Am. Chem. Soc.,* 2006, vol. 128, 10310
- **SUMMERS et al.** *Adv. Mater.,* 2008, vol. 20, 4163
- Clusters and Colloids. VCH, 1994
- Colloidal Gold: Principles, Methods, and Applications. Academic Press, 1991
- **AHMADI et al.** *Science,* 1996, vol. 272 (1924
- **HENGLEIN et al.** *J. Phys. Chem.,* 1995, vol. 99, 14129
- **CURTIS et al.** *Angew. Chem., Int. Ed.,* 1988, vol. 27, 1530
- **BRUST et al.** *J. Chem. Soc. Chem. Commun.,* 1994, 801
- **WELLER.** *Angew. Chem., Int Ed. Engl.,* 1993, vol. 32, 41
- **HENGLEIN, A.** *Top. Curr. Chem.,* 1988, vol. 143, 113
- **HENGLEIN.** *Chem. Rev.,* 1989, vol. 89, 1861
- **BRUS.** *Appl. Phys. A.,* 1991, vol. 53, 465
- **WANG ; HERRON.** *J. Phys. Chem.,* 1991, vol. 95, 525
- **OLSHAVSKY et al.** *J. Am. Chem. Soc.,* 1990, vol. 112, 9438
- **USHIDA et al.** *J. Phys. Chem.,* 1992, vol. 95, 5382
- **HAGGATA et al.** *J. Mater. Chem,* 1997, vol. 7, 1969-1975
- **MICIC et al.** *J. Phys. Chem.,* 1995, vol. 99, 7754
- **XIA ; WHITESIDES.** *Angew. Chem. Int. Ed.,* 1998, vol. 37, 550
- **BISHOP et al.** *Curr. Opinion Colloid & Interface Sci.,* 1996, vol. 1, 127
- **ULMAN.** *Chem. Rev.,* 1996, vol. 96, 1533
- **ALLARA ; NUZZO.** *Langmuir,* 1985, vol. 1, 45
- **ALLARA ; TOMPKINS.** *J. Colloid Interface Sci.,* 1974, vol. 49, 410
- **TIMMONS ; ZISMAN.** *J. Phys. Chem.,* 1965, vol. 69, 984
- **MAOZ ; SAGIV.** *Langmuir,* 1987, vol. 3, 1045
- **ELTEKOVA ; ELTEKOV.** *Langmuir,* 1987, vol. 3, 951
- **SHEEN et al.** *J. Am. Chem. Soc.,* 1992, vol. 114, 1514
- **GU et al.** *J. Phys. Chem. B,* 1998, vol. 102, 9015
- **MAYYA et al.** *J. Phys. Chem. B,* 1997, vol. 101, 9790
- **MEYER et al.** *J. Am. Chem. Soc.,* 1988, vol. 110, 4914
- **OKUBO et al.** *Colloid Polym. Sci.,* 1999, vol. 277, 900
- **CAIRNS et al.** *Langmuir,* 1999, vol. 15, 8052
- **LANDFESTER et al.** *Macromolecules,* 1999, vol. 32, 5222

- **MING et al.** *Macromolecules,* 1999, vol. 32, 528-530
- **SCHAERTL et al.** *Prog. Colloid Polym. Sci.,* 1998, vol. 110, 285-290
- **LI et al.** *Macromolecules,* 1998, vol. 31, 6841-6844
- **ZHANG et al.** *Macromolecules,* 1997, vol. 30, 6388-6390
- **LARPENT et al.** *Macromolecules,* 1997, vol. 30, 354-362
- **BANERJ et al.** *Macromolecules,* 1995, vol. 28, 3940-3
- **ZHENG et al.** *Macromolecules,* 2004, vol. 37, 9954
- **HAWKER et al.** *J. Am. Chem. Soc.,* 2006, vol. 128, 15054
- **KAYNAK et al.** *Syn. Met.,* 2005, vol. 151, 136
- **MULLEN et al.** *Macromolecular Rapid Commun,* 2006, vol. 27, 586
- **YAKHMI et al.** *Langmuir,* 2004, vol. 20, 4874
- **CHOI et al.** *Syn. Met.,* 2004, vol. 141, 293
- **WILKE et al.** *Angew. Chem. Internat. Edit.,* 1966, vol. 5, 581
- **HIDAY et al.** *J. Organometal. Chem.,* 1971, vol. 30, 279
- **FAUVARQUE et al.** *Organomet. Chem.,* 1979, vol. 177, 273
- **SACCO et al.** *J. Chem. Soc. Dalton Trans.,* 1994, 2761
- **AMATORE et al.** *Organometalics,* 1988, vol. 7, 2203
- **MCCULLOUGH et al.** *J. Org. Chem.,* 1993, vol. 58, 904
- **LECLERC et al.** *Acc. Chem. Res.,* 2008, vol. 41, 1110
- **SARICIFTCI et al.** *Chem. Rev.,* 2007, vol. 107, 1324
- **GETTINGER et al.** *Polym. Engin. Sci.,* 1995, vol. 35, 860
- **BRITTAIN et al.** *J. Polym. Sci. Part A: Polymer. Chem.,* 2007, vol. 45, 3505
- **F. DAVIS.** Polymer chemistry: a practical approach. Oxford University Press, 2004, 248
- **MCCULLOUGH et al.** *Macromolecules,* 2003, vol. 36, 61-64
- *Macromolecules,* 2003, vol. 36, 7114-18